# EUROPEAN PATENT APPLICATION

(11) **EP 4 697 819 A2**
(43) Date of publication of application: **18.02.2026**
(21) Application number: 25224183.1
(22) Date of filing: 09.06.2022
(51) Int. Cl.: H04W 52/02

(54) **DISCONTINUOUS RECEPTION METHODOLOGY FOR MULTIMEDIA**

(30) Priority: 09.07.2021 US 202163203156 P; 08.06.2022 US 202217806071
(62) Divisional of application: 25158717.6
(71) Applicant: QUALCOMM Incorporated, San Diego, CA 92121-1714 (US)
(72) Inventor: LEE, Hyun Yong, San Diego, CA 92121-1714 (US); HANDE, Prashanth Haridas, San Diego, CA 92121-1714 (US); TINNAKORNSRISUPHAP, Peerapol, San Diego, CA 92121-1714 (US); MONDET, Mickael, San Diego, CA 92121-1714 (US); PRAKASH, Rajat, San Diego, CA 92121-1714 (US); OZTURK, Ozcan, San Diego, CA 92121-1714 (US)
(74) Representative: Bardehle Pagenberg Partnerschaft mbB Patentanwälte Rechtsanwälte

(57) **Abstract**

Various aspects of the present disclosure generally relate to wireless communication. In some aspects, a user equipment (UE) may set a hyper frame length based at least in part on a cadence of multimedia data bursts if discontinuous reception (DRX) cycle are configured for the cadence of the multimedia data bursts. The UE may receive the multimedia data bursts according to the DRX cycles. Numerous other aspects are described.

## Description

### CROSS-REFERENCE TO RELATED APPLICATIONS

This Patent Application claims priority to U.S. Provisional Patent Application No. 63/203,156, filed on July 9, 2021, entitled "DISCONTINUOUS RECEPTION METHODOLOGY FOR MULTIMEDIA," and U.S. Nonprovisional Patent Application No. 17/806,071, filed on June 8, 2022, entitled "DISCONTINUOUS RECEPTION METHODOLOGY FOR MULTIMEDIA," which are hereby expressly incorporated by reference herein.

### FIELD OF THE DISCLOSURE

Aspects of the present disclosure generally relate to wireless communication and to techniques and apparatuses for a discontinuous reception (DRX) methodology for multimedia.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

### SUMMARY

Some aspects described herein relate to a method of wireless communication performed by a user equipment (UE). The method may include setting a hyper frame length based at least in part on a cadence of multimedia data bursts if discontinuous reception (DRX) cycles are configured for the cadence of the multimedia data bursts. The method may include receiving the multimedia data bursts according to the DRX cycles. In this way, the UE may avoid a misalignment between the cadence of the multimedia bursts and DRX cycles when system frame numbers wrap around after an end of the hyper frame.

Some aspects described herein relate to a method of wireless communication performed by a UE. The method may include sleeping as part of a DRX cycle. The method may include waking up, starting at a subframe, based at least in part on a subframe identifier of the subframe and a DRX cycle periodicity that corresponds to a multiple of a periodicity of multimedia data bursts. The method may include receiving a multimedia data burst during the subframe.

Some aspects described herein relate to a method of wireless communication performed by a network entity. The method may include selecting a hyper frame length based at least in part on a cadence of multimedia data bursts if DRX cycles are configured for the cadence of the multimedia data bursts. The method may include transmitting an indication of the hyper frame length.

Some aspects described herein relate to a method of wireless communication performed by a UE. The method may include sleeping as part of a DRX cycle. The method may include waking up, starting at a slot, based at least in part on a slot identifier of the slot and a DRX cycle periodicity that corresponds to a multiple of a periodicity of multimedia data bursts. The method may include receiving a multimedia data burst during the slot.

Some aspects described herein relate to a method of wireless communication performed by a UE. The method may include waking up during an on-duration occasion of a DRX cycle to receive a multimedia data burst. The method may include shifting a timing of a next on-duration occasion of the DRX cycle based at least in part on the DRX cycle and a cadence of multimedia data bursts.

Some aspects described herein relate to a method of wireless communication performed by a network entity. The method may include determining that a subframe index misalignment shift is to occur in a DRX cycle for a UE. The method may include transmitting, to the UE in a medium access control control element (MAC CE), an indication to shift a timing of a next on-duration occasion of the DRX cycle.

Some aspects described herein relate to a UE for wireless communication. The UE may include memory, one or more processors coupled to the memory, and instructions stored in the memory and executable by the one or more processors. The instructions may be executable by the one or more processors to cause the UE to set a hyper frame length based at least in part on a cadence of multimedia data bursts if DRX cycles are configured for the cadence of the multimedia data bursts. The instructions may be executable by the one or more processors to cause the UE to receive the multimedia data bursts according to the DRX cycles.

Some aspects described herein relate to a UE for wireless communication. The UE may include memory, one or more processors coupled to the memory, and instructions stored in the memory and executable by the one or more processors. The instructions may be executable by the one or more processors to cause the UE to sleep as part of a DRX cycle. The instructions may be executable by the one or more processors to cause the UE to wake up, starting at a subframe, based at least in part on a subframe identifier of the subframe and a DRX cycle periodicity that corresponds to a multiple of a periodicity of multimedia data bursts. The instructions may be executable by the one or more processors to cause the UE to receive a multimedia data burst during the subframe.

Some aspects described herein relate to a network entity for wireless communication. The network entity may include memory, one or more processors coupled to the memory, and instructions stored in the memory and executable by the one or more processors. The instructions may be executable by the one or more processors to cause the network entity to select a hyper frame length based at least in part on a cadence of multimedia data bursts if DRX cycles are configured for the cadence of the multimedia data bursts. The instructions may be executable by the one or more processors to cause the network entity to transmit an indication of the hyper frame length.

Some aspects described herein relate to a UE for wireless communication. The UE may include memory, one or more processors coupled to the memory, and instructions stored in the memory and executable by the one or more processors. The instructions may be executable by the one or more processors to cause the UE to sleep as part of a DRX cycle. The instructions may be executable by the one or more processors to cause the UE to wake up, starting at a slot, based at least in part on a slot identifier of the slot and a DRX cycle periodicity that corresponds to a multiple of a periodicity of multimedia data bursts. The instructions may be executable by the one or more processors to cause the UE to receive a multimedia data burst during the slot.

Some aspects described herein relate to a UE for wireless communication. The UE may include memory, one or more processors coupled to the memory, and instructions stored in the memory and executable by the one or more processors. The instructions may be executable by the one or more processors to cause UE to wake up during an on-duration occasion of a DRX cycle to receive a multimedia data burst. The instructions may be executable by the one or more processors to cause the UE to shift a timing of a next on-duration occasion of the DRX cycle based at least in part on the DRX cycle and a cadence of multimedia data bursts.

Some aspects described herein relate to a network entity for wireless communication. The network entity may include memory, one or more processors coupled to the memory, and instructions stored in the memory and executable by the one or more processors. The instructions may be executable by the one or more processors to cause the network entity to determine that a subframe index misalignment shift is to occur in a DRX cycle for a UE. The instructions may be executable by the one or more processors to cause the network entity to transmit, to the UE in a MAC CE, an indication to shift a timing of a next on-duration occasion of the DRX cycle.

Some aspects described herein relate to a non-transitory computer-readable medium that stores one or more instructions for wireless communication by a UE. The one or more instructions, when executed by one or more processors of the UE, may cause the UE to set a hyper frame length based at least in part on a cadence of multimedia data bursts if DRX cycles are configured for the cadence of the multimedia data bursts. The one or more instructions, when executed by one or more processors of the UE, may cause the UE to receive the multimedia data bursts according to the DRX cycles.

Some aspects described herein relate to a non-transitory computer-readable medium that stores one or more instructions for wireless communication by a UE. The one or more instructions, when executed by one or more processors of the UE, may cause the UE to sleep as part of a DRX cycle. The one or more instructions, when executed by one or more processors of the UE, may cause the UE to wake up, starting at a subframe, based at least in part on a subframe identifier of the subframe and a DRX cycle periodicity that corresponds to a multiple of a periodicity of multimedia data bursts. The one or more instructions, when executed by one or more processors of the UE, may cause the UE to receive a multimedia data burst during the subframe.

Some aspects described herein relate to a non-transitory computer-readable medium that stores one or more instructions for wireless communication by a network entity. The one or more instructions, when executed by one or more processors of the network entity, may cause the network entity to select a hyper frame length based at least in part on a cadence of multimedia data bursts if DRX cycles are configured for the cadence of the multimedia data bursts. The one or more instructions, when executed by one or more processors of the network entity, may cause the network entity to transmit an indication of the hyper frame length.

Some aspects described herein relate to a non-transitory computer-readable medium that stores one or more instructions for wireless communication by a UE. The one or more instructions, when executed by one or more processors of the UE, may cause the UE to sleep as part of a DRX cycle. The one or more instructions, when executed by one or more processors of the UE, may cause the UE to wake up, starting at a slot, based at least in part on a slot identifier of the slot and a DRX cycle periodicity that corresponds to a multiple of a periodicity of multimedia data bursts. The one or more instructions, when executed by one or more processors of the UE, may cause the UE to receive a multimedia data burst during the slot.

Some aspects described herein relate to a non-transitory computer-readable medium that stores one or more instructions for wireless communication by a UE. The one or more instructions, when executed by one or more processors of the UE, may cause the UE to wake up during an on-duration occasion of a DRX cycle to receive a multimedia data burst. The one or more instructions, when executed by one or more processors of the UE, may cause the UE to shift a timing of a next on-duration occasion of the DRX cycle based at least in part on the DRX cycle and a cadence of multimedia data bursts.

Some aspects described herein relate to a non-transitory computer-readable medium that stores one or more instructions for wireless communication by a network entity. The one or more instructions, when executed by one or more processors of the network entity, may cause the network entity to determine that a subframe index misalignment shift is to occur in a DRX cycle for a UE. The one or more instructions, when executed by one or more processors of the network entity, may cause the network entity to transmit, to the UE in a MAC CE, an indication to shift a timing of a next on-duration occasion of the DRX cycle.

Some aspects described herein relate to an apparatus for wireless communication. The apparatus may include means for setting a hyper frame length based at least in part on a cadence of multimedia data bursts if DRX cycles are configured for the cadence of the multimedia data bursts. The apparatus may include means for receiving the multimedia data bursts according to the DRX cycles.

Some aspects described herein relate to an apparatus for wireless communication. The apparatus may include means for sleeping as part of a DRX cycle. The apparatus may include means for waking up, starting at a subframe, based at least in part on a subframe identifier of the subframe and a DRX cycle periodicity that corresponds to a multiple of a periodicity of multimedia data bursts. The apparatus may include means for receiving a multimedia data burst during the subframe.

Some aspects described herein relate to an apparatus for wireless communication. The apparatus may include means for selecting a hyper frame length based at least in part on a cadence of multimedia data bursts if DRX cycles are configured for the cadence of the multimedia data bursts. The apparatus may include means for transmitting an indication of the hyper frame length.

Some aspects described herein relate to an apparatus for wireless communication. The apparatus may include means for sleeping as part of a DRX cycle. The apparatus may include means for waking up, starting at a slot, based at least in part on a slot identifier of the slot and a DRX cycle periodicity that corresponds to a multiple of a periodicity of multimedia data bursts. The apparatus may include means for receiving a multimedia data burst during the slot.

Some aspects described herein relate to an apparatus for wireless communication. The apparatus may include means for waking up during an on-duration occasion of a DRX cycle to receive a multimedia data burst. The apparatus may include means for shifting a timing of a next on-duration occasion of the DRX cycle based at least in part on the DRX cycle and a cadence of multimedia data bursts.

Some aspects described herein relate to an apparatus for wireless communication. The apparatus may include means for determining that a subframe index misalignment shift is to occur in a DRX cycle for a UE. The apparatus may include means for transmitting, to the UE in a MAC CE, an indication to shift a timing of a next on-duration occasion of the DRX cycle.

Some aspects described herein relate to a method of wireless communication performed by a UE, comprising: waking up during an on-duration occasion of a DRX cycle to receive a multimedia data burst. The method may include compensating for a timing drift between DRX on-durations and multimedia burst traffic that is associated with a misalignment between a hyper frame length and a periodicity of the multimedia data bursts.

Some aspects described herein relate to a UE for wireless communication. The UE may include memory, one or more processors coupled to the memory, and instructions stored in the memory and executable by the one or more processors. The instructions may be executable by the one or more processors to cause UE to wake up during an on-duration occasion of a DRX cycle to receive a multimedia data burst. The instructions may be executable by the one or more processors to cause the UE to compensate for a timing drift between DRX on-durations and multimedia burst traffic that is associated with a misalignment between a hyper frame length and a periodicity of the multimedia data bursts.

Some aspects described herein relate to a non-transitory computer-readable medium that stores one or more instructions for wireless communication by a UE. The one or more instructions, when executed by one or more processors of the UE, may cause the UE to wake up during an on-duration occasion of a DRX cycle to receive a multimedia data burst. The one or more instructions, when executed by one or more processors of the UE, may cause the UE to compensate for a timing drift between DRX on-durations and multimedia burst traffic that is associated with a misalignment between a hyper frame length and a periodicity of the multimedia data bursts.

Some aspects described herein relate to an apparatus for wireless communication. The apparatus may include means for waking up during an on-duration occasion of a DRX cycle to receive a multimedia data burst. The apparatus may include means for compensating for a timing drift between DRX on-durations and multimedia burst traffic that is associated with a misalignment between a hyper frame length and a periodicity of the multimedia data bursts.

Aspects generally include a method, apparatus, system, computer program product, non-transitory computer-readable medium, user equipment, base station, network entity, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of devices designed for low latency applications, in accordance with the present disclosure.
Fig. 4 is a diagram illustrating an example of low-latency traffic and power states, in accordance with the present disclosure.
Fig. 5 illustrates an example of a misalignment of a discontinuous reception (DRX) cycle and extended reality traffic periodicity, in accordance with the present disclosure.
Fig. 6 illustrates an example of an anchor cycle with a leap DRX cycle, in accordance with the present disclosure.
Fig. 7 illustrates an example of a DRX configuration with dynamic offset adjustment that supports DRX techniques with non-uniform cycle durations, in accordance with the present disclosure.
Fig. 8 is a diagram illustrating an example of using a short cadence value for DRX, in accordance with the present disclosure.
Fig. 9 is a diagram illustrating an example of using a short cadence value for DRX for slot positions, in accordance with the present disclosure.
Fig. 10 is a diagram illustrating an example of using a short cadence value for DRX, in accordance with the present disclosure.
Fig. 11 is a diagram illustrating an example of using different short cadence values, in accordance with the present disclosure.
Fig. 12 is a diagram illustrating an example of using a short cadence value for DRX, in accordance with the present disclosure.
Fig. 13 is a diagram illustrating an example of using a short cadence value for DRX, in accordance with the present disclosure.
Fig. 14 is a diagram illustrating an example of a system frame number wraparound, in accordance with the present disclosure.
Fig. 15 is a diagram illustrating an example of setting a hyper frame length, in accordance with the present disclosure.
Fig. 16 is a diagram illustrating an example of a radio resource control (RRC) configuration for DRX cycles, in accordance with the present disclosure.
Fig. 17 is a diagram illustrating an example of starting a hyper frame for an RRC configuration for DRX cycles, in accordance with the present disclosure.
Fig. 18 is a diagram illustrating an example process performed, for example, by a UE, in accordance with the present disclosure.
Fig. 19 is a diagram illustrating an example process performed, for example, by a base station, in accordance with the present disclosure.
Figs. 20-21 are block diagrams of example apparatuses for wireless communication, in accordance with the present disclosure.
Fig. 22 is a diagram illustrating an example process performed, for example, by a UE, in accordance with the present disclosure.
Fig. 23 is a diagram illustrating an example process performed, for example, by a UE, in accordance with the present disclosure.
Fig. 24 is a diagram illustrating an example process performed, for example, by a UE, in accordance with the present disclosure.
Fig. 25 is a diagram illustrating an example process performed, for example, by a base station, in accordance with the present disclosure.
Figs. 26-29 are block diagrams of example apparatuses for wireless communication, in accordance with the present disclosure.
Fig. 30 is a diagram illustrating an example of a disaggregated base station 3000, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

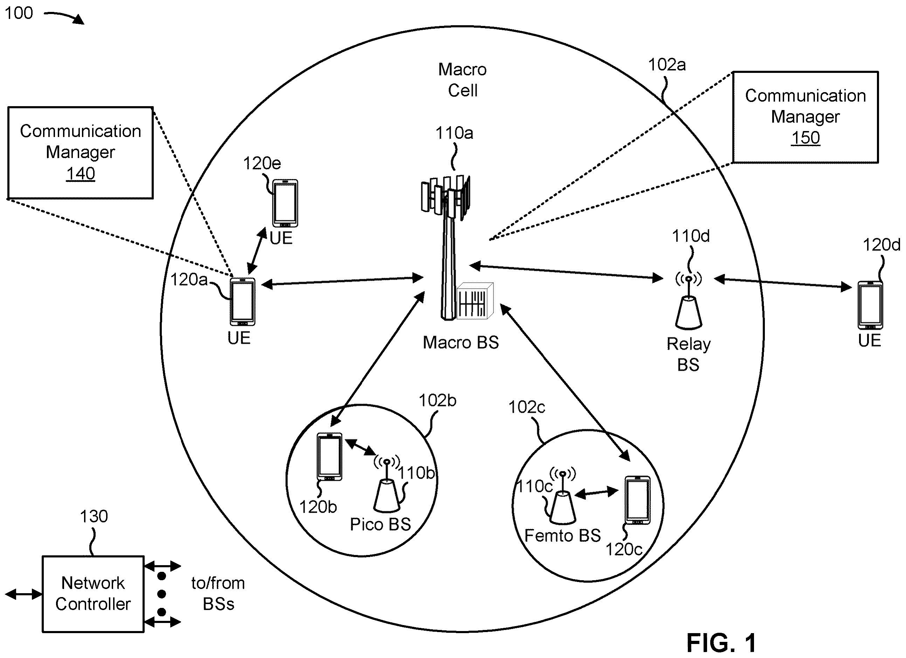

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, a transmit receive point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells. The terms "eNB", "base station", "NR BS", "gNB", "TRP", "AP", "node B", "5G NB", and "cell" may be used interchangeably herein.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

In some aspects, the term "base station" (e.g., the base station 110) or "network entity" may refer to an aggregated base station, a disaggregated base station, an integrated access and backhaul (IAB) node, a relay node, and/or one or more components thereof. For example, in some aspects, "base station" or "network entity" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station" or "network entity" may refer to one device configured to perform one or more functions, such as those described herein in connection with the base station 110. In some aspects, the term "base station" or "network entity" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station" or "network entity" may refer to any one or more of those different devices. In some aspects, the term "base station" or "network entity" may refer to one or more virtual base stations and/or one or more virtual base station functions. For example, in some aspects, two or more base station functions may be instantiated on a single device. In some aspects, the term "base station" or "network entity" may refer to one of the base station functions and not another. In this way, a single device may include more than one base station.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. A wireless node may provide, for example, connectivity for or to a network (e.g., a wide area network such as Internet or a cellular network) via a wired or wireless communication link. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "sub-6 GHz" band. A similar nomenclature issue sometimes occurs with regard to FR2, which is often referred to (interchangeably) as a "millimeter wave" band despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, the UE 120 may include a communication manager 140. As described in more detail elsewhere herein, the communication manager 140 may set a hyper frame length based at least in part on a cadence of multimedia data bursts if a discontinuous reception (DRX) cycles are configured for the cadence of the multimedia data bursts, and receive the multimedia data bursts according to the DRX cycles. Additionally, or alternatively, the communication manager 140 may perform one or more other operations described herein.

In some aspects, the UE 120 may include a communication manager 140. As described in more detail elsewhere herein, the communication manager 140 may sleep as part of a DRX cycle and wake up, starting at a subframe, based at least in part on a subframe identifier of the subframe and a DRX cycle periodicity that corresponds to a multiple of a periodicity of multimedia data bursts. The communication manager 140 may receive a multimedia data burst during the subframe. Additionally, or alternatively, the communication manager 140 may perform one or more other operations described herein.

In some aspects, a network entity (e.g., base station 110) may include a communication manager 150. As described in more detail elsewhere herein, the communication manager 150 may select a hyper frame length based at least in part on a cadence of multimedia data bursts if DRX cycles are configured for the cadence of the multimedia data bursts and transmit an indication of the hyper frame length. Additionally, or alternatively, the communication manager 150 may perform one or more other operations described herein.

In some aspects, the UE 120 may include a communication manager 140. As described in more detail elsewhere herein, the communication manager 140 may sleep as part of a DRX cycle and wake up, starting at a slot, based at least in part on a slot identifier of the slot and a DRX cycle periodicity that corresponds to a multiple of a periodicity of multimedia data bursts. The communication manager 140 may receive a multimedia data burst during the slot. Additionally, or alternatively, the communication manager 140 may perform one or more other operations described herein.

In some aspects, the UE 120 may include a communication manager 140. As described in more detail elsewhere herein, the communication manager 140 may wake up during an on-duration occasion of a DRX cycle to receive a multimedia data burst and shift a timing of a next on-duration occasion of the DRX cycle based at least in part on the DRX cycle and a cadence of multimedia data bursts. Additionally, or alternatively, the communication manager 140 may perform one or more other operations described herein.

In some aspects, the network entity may include a communication manager 150. As described in more detail elsewhere herein, the communication manager 150 may determine that a subframe index misalignment shift is to occur in a DRX cycle for a UE and transmit, to the UE in a medium access control control element (MAC CE), an indication to shift a timing of a next on-duration occasion of the DRX cycle. Additionally, or alternatively, the communication manager 150 may perform one or more other operations described herein.

As indicated above, Fig. 1 is provided as an example. Other examples may differ from what is described with regard to Fig. 1.

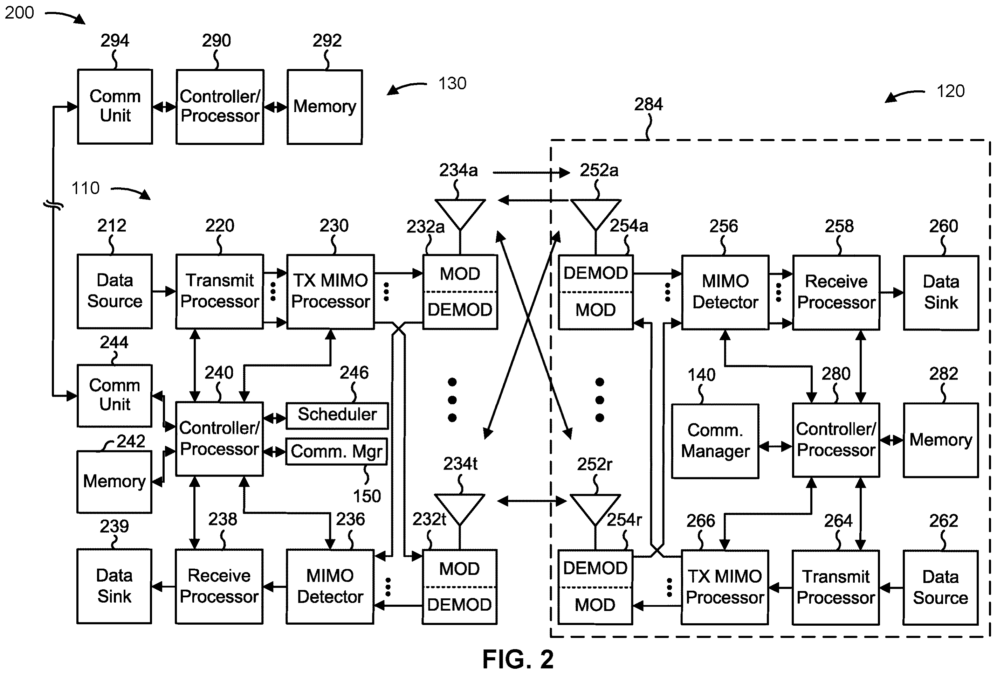

Fig. 2 is a diagram illustrating an example 200 of a base station 110 in communication with a UE 120 in a wireless network 100, in accordance with the present disclosure. The base station 110 may be equipped with T antennas 234a through 234t, and UE 120 may be equipped with R antennas 252a through 252r, where in general T ≥ 1 and R ≥ 1.

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

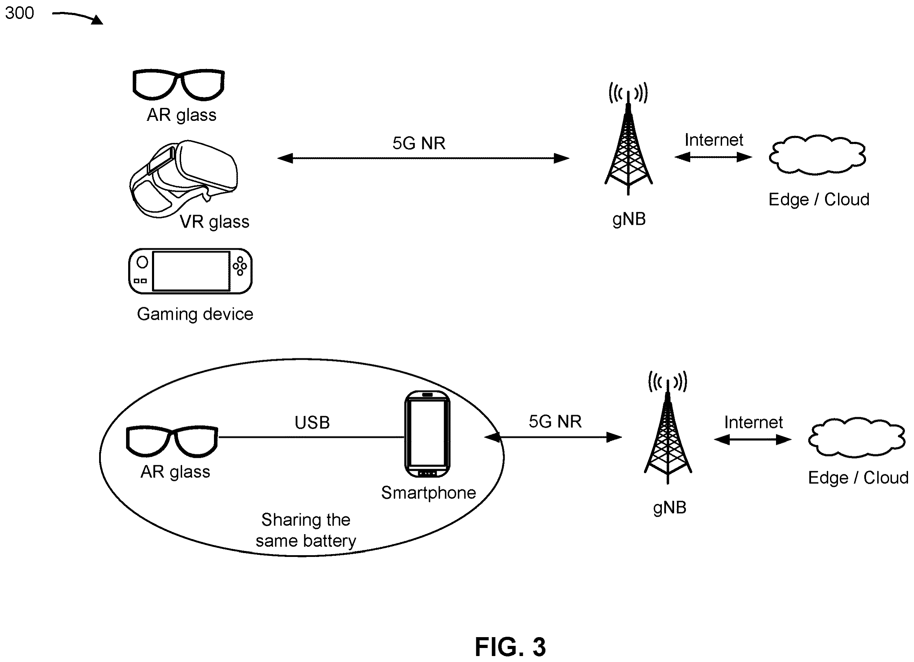

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 3-30).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 3-30).

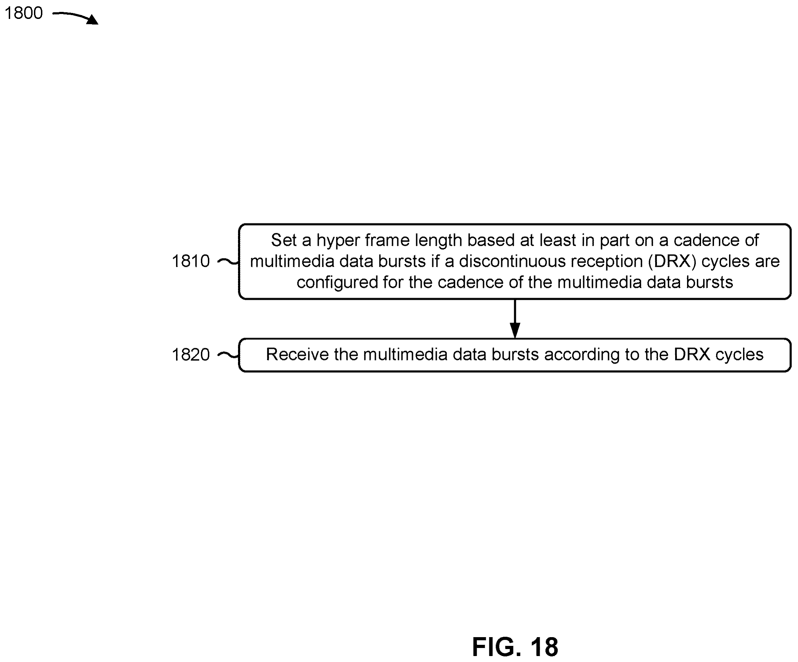

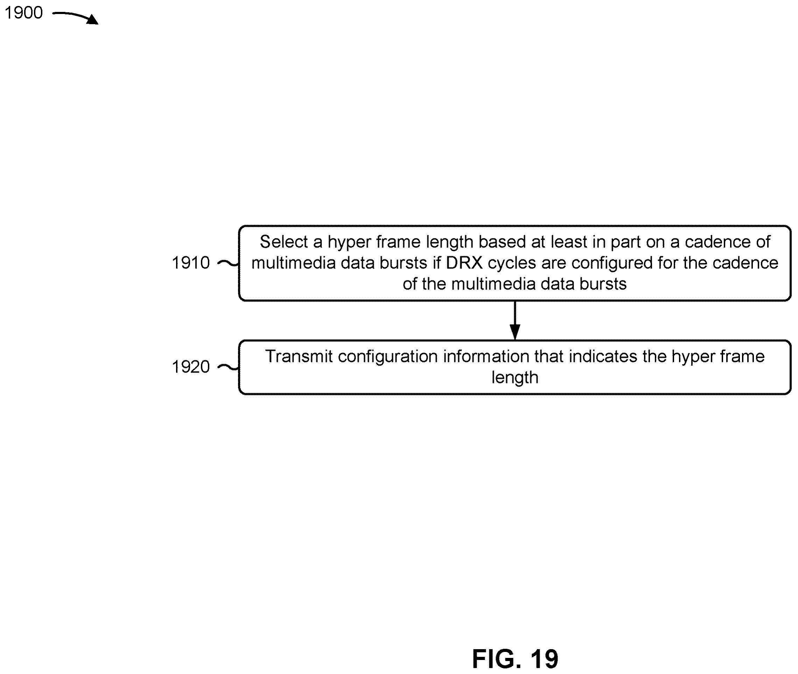

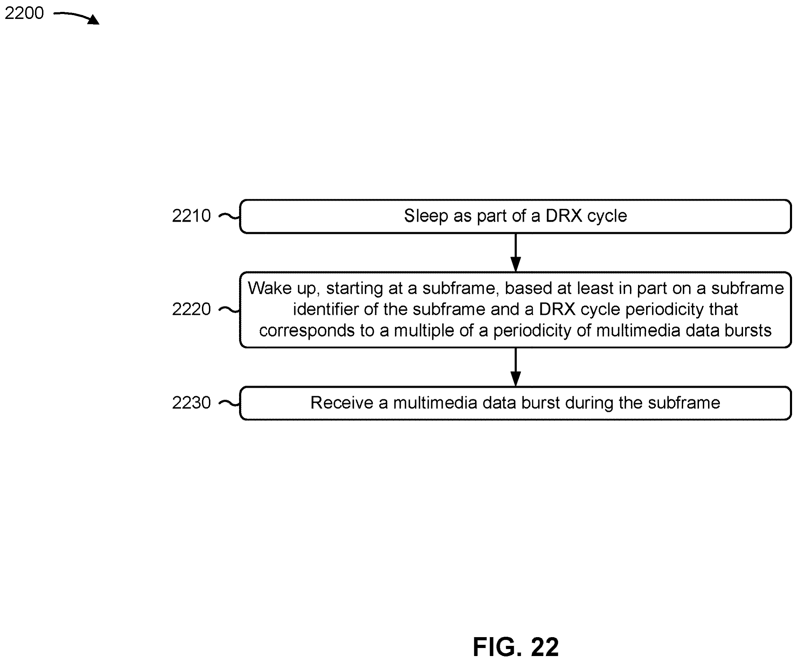

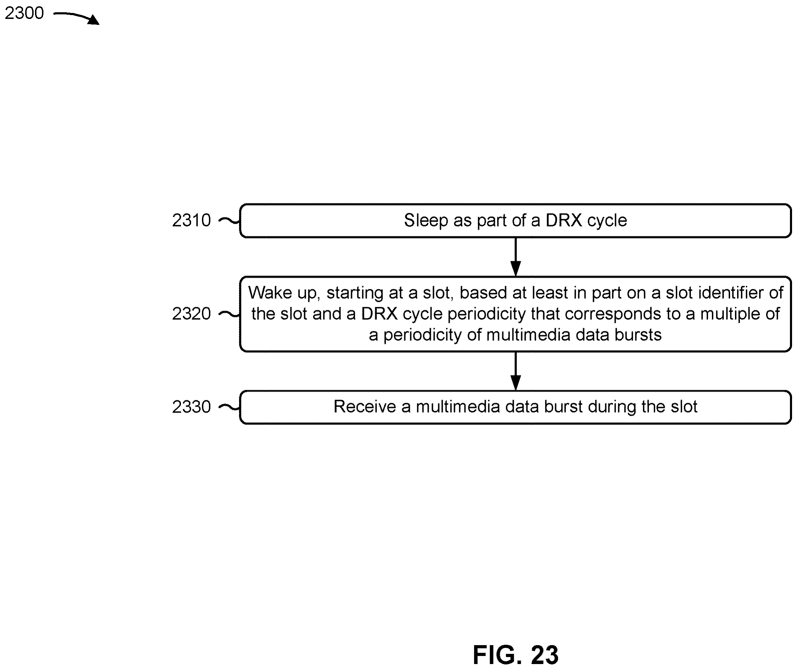

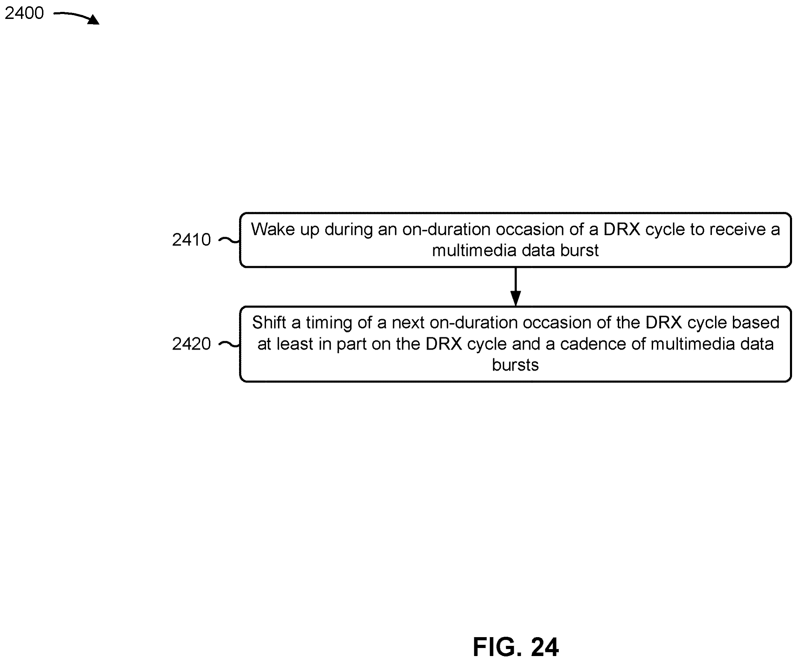

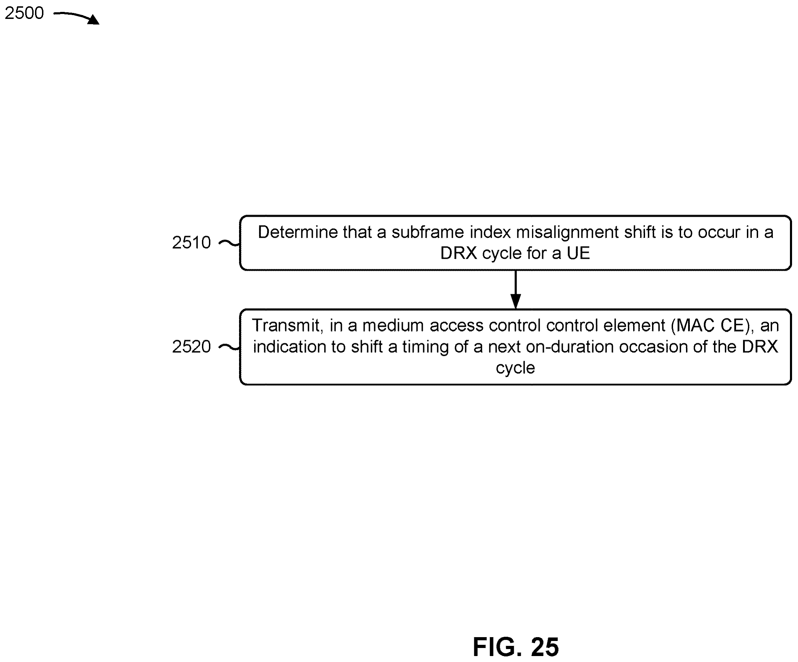

The controller/processor 240 of a network entity (e.g., base station 110), the controller/processor 280 of the UE 120, and/or any other component(s) of Fig. 2 may perform one or more techniques associated with methodologies for DRX, such as setting a hyper frame length for DRX, as described in more detail elsewhere herein. For example, the controller/processor 240 of the base station 110, the controller/processor 280 of the UE 120, and/or any other component(s) of Fig. 2 may perform or direct operations of, for example, process 1800 of Fig. 18, process 1900 of Fig 19, process 2200 of Fig. 22, process 2300 of Fig. 23, process 2400 of Fig. 24, process 2500 of Fig. 25, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 1800 of Fig. 18, process 1900 of Fig 19, process 2200 of Fig. 22, process 2300 of Fig. 23, process 2400 of Fig. 24, process 2500 of Fig. 25, and/or other processes as described herein. In some examples, executing instructions may include running the instructions, converting the instructions, compiling the instructions, and/or interpreting the instructions, among other examples.

In some aspects, the UE 120 includes means for setting a hyper frame length based at least in part on a cadence of multimedia data bursts if DRX cycles are configured for the cadence of the multimedia data bursts, and/or means for receiving the multimedia data bursts according to the DRX cycles. The means for the UE 120 to perform operations described herein may include, for example, one or more of communication manager 140, antenna 252, demodulator 254, MIMO detector 256, receive processor 258, transmit processor 264, TX MIMO processor 266, modulator 254, controller/processor 280, or memory 282.

In some aspects, the UE 120 includes means for sleeping as part of a DRX cycle, means for waking up, starting at a subframe, based at least in part on a subframe identifier of the subframe and a DRX cycle periodicity that corresponds to a multiple of a periodicity of multimedia data bursts, and/or means for receiving a multimedia data burst during the subframe.

In some aspects, a network entity (e.g., base station 110) includes means for selecting a hyper frame length based at least in part on a cadence of multimedia data bursts if a DRX cycles are configured for the cadence of the multimedia data bursts, and/or means for transmitting an indication of the hyper frame length. The means for the base station 110 to perform operations described herein may include, for example, one or more of communication manager 150, transmit processor 220, TX MIMO processor 230, modulator 232, antenna 234, demodulator 232, MIMO detector 236, receive processor 238, controller/processor 240, memory 242, or scheduler 246.

In some aspects, the UE 120 includes means for sleeping as part of a DRX cycle, means for waking up, starting at a slot, based at least in part on a slot identifier of the slot and a DRX cycle periodicity that corresponds to a multiple of a periodicity of multimedia data bursts, and/or means for receiving a multimedia data burst during the slot.

In some aspects, the UE 120 includes means for waking up during an on-duration occasion of a DRX cycle to receive a multimedia data burst, and/or means for shifting a timing of a next on-duration occasion of the DRX cycle based at least in part on the DRX cycle and a cadence of multimedia data bursts.

In some aspects, the network entity includes means for determining that a subframe index misalignment shift is to occur in a DRX cycle for a UE, and/or means for transmitting, to the UE in a MAC CE, an indication to shift a timing of a next on-duration occasion of the DRX cycle.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

Figs. 3-5 describe issues that aspects of the invention help to overcome. Fig. 3 is a diagram illustrating an example 300 of devices designed for low latency applications, in accordance with the present disclosure.

Some devices, including devices for extended reality (XR), may require low-latency traffic to and from an edge server or a cloud environment. Example 300 shows communications between an XR device and the edge server or the cloud environment, via a base station (e.g., gNB). The XR device may be an augmented reality (AR) glass device, a virtual reality (VR) glass device, or other gaming device. XR devices may have limited battery capacity while being expected to have a battery life of a smartphone (e.g., full day of use). Battery power is an issue even when the XR device is tethered to a smartphone and uses the same smartphone battery. XR device power dissipation may be limited and may lead to an uncomfortable user experience and/or a short battery life.

As indicated above, Fig. 3 is provided as an example. Other examples may differ from what is described with regard to Fig. 3.

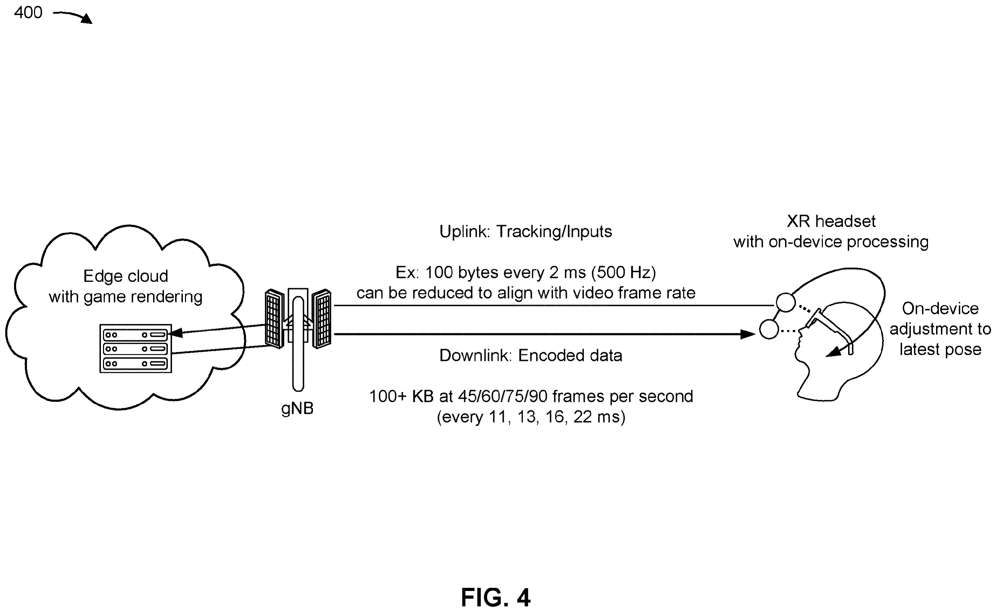

Fig. 4 is a diagram illustrating an example 400 of low-latency traffic and power states, in accordance with the present disclosure.

Power dissipation may be reduced by limiting an amount of time that processing resources of the XR device are active for computations and power consumption. Some wireless communications systems may a support a UE, such as the XR device, that operates in a DRX mode. A UE in a DRX mode may transition between a sleep state for power conservation and an active state for data transmission and reception. The active state for data transmission and reception may be referred to as a DRX "ON-duration." A UE that uses different DRX cycles may have non-uniform cycle durations within a DRX time period. Such non-uniform cycle durations may provide DRX ON-durations that are aligned with a periodicity of downlink traffic to the UE. In some cases, the DRX time period may correspond to an anchor cycle that spans a set of DRX cycles, and a subset of the set of DRX cycles may have a different cycle duration than other DRX cycles of the set of DRX cycles. In some cases, an ON-duration offset value may be indicated for one or more DRX cycles within the DRX time period (e.g., via downlink control information (DCI) or a MAC CE).

By offloading some computations to an edge server, an XR device may save processing resources. Example 400 shows a scenario where an XR device may split computations for an application with the edge server on the other side of a base station. The edge server may render video frames, such as intra-coded (I) frames and predicted (P) frames, encode the video frames, align the video frames with user pose information, and perform other related computations. However, this means there may be more traffic between the XR device and the edge server, which will cause the XR device to consume more power and signaling resources. XR downlink traffic (e.g., video frames) may have a periodic pattern that corresponds to a frame rate of transmitted video data (e.g., H.264/H.265 encoded video). Such downlink traffic may be quasi-periodic with a data burst every frame at one frame-per-second (1/fps), or two possibly staggered "eye-buffers" per frame at 1/(2*fps). For example, XR downlink traffic may include 100+ kilobytes (KB) of data for 45, 60, 75, or 90 frames per second (e.g., every 11 ms, 13 ms, 16 ms, or 22 ms). XR uplink traffic may include controller information for gaming, information for VR split rendering, and/or the user pose information. The XR uplink traffic may include 100 bytes every 2 ms (500 Hz). The XR device may reduce this periodicity to align the XR uplink traffic with the XR downlink traffic.

For low-latency applications, the DRX cycle and a start offset of a DRX cycle are to be time-aligned to downlink traffic arrivals. For example, the XR device may serve the user and enter a brief sleep state in a DRX cycle and do so between video frames. The XR device and the edge server may attempt to align the uplink and downlink DRX cycles as part of connected DRX (CDRX). However, there are DRX-multimedia timing mismatches that prevent such alignment and that prevent successful use of CDRX. For example, an update rate may be, for example, 120 Hz or 60 Hz, thus resulting in a downlink traffic burst arrival periodicity of 8.333 ms or 16.667 ms, respectively. However, conventional DRX configuration may have one millisecond as the finest granularity for a DRX cycle, and the start of the ON-duration may be aligned to millisecond time boundaries. These partial millisecond differences may compound with each instance of a period to misalign the DRX cycle and the XR traffic periodicity. For example, the XR traffic period may drift to a middle of the DRX cycle. This causes an increase in latency and power consumption.

As indicated above, Fig. 4 is provided as an example. Other examples may differ from what is described with regard to Fig. 4.

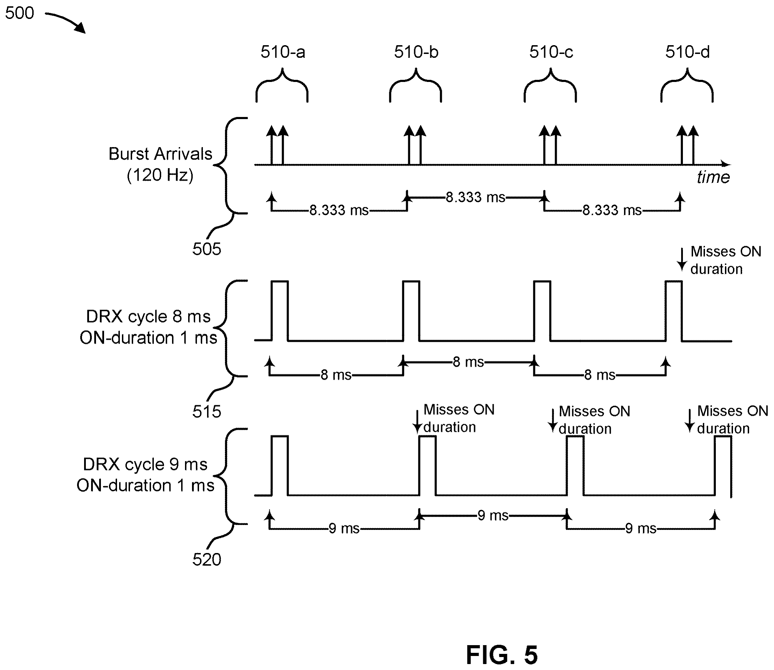

Fig. 5 illustrates an example 500 of a misalignment of a DRX cycle and XR traffic periodicity, in accordance with the present disclosure. Example 500 shows downlink traffic burst arrivals 505 that may include a number of downlink traffic bursts 510 that are transmitted according to a periodic pattern. Example 500 also shows a first conventional DRX configuration 515 and a second conventional DRX configuration 520.

The downlink traffic bursts 510 may include, for example, XR downlink traffic with a periodic pattern that corresponds to a frame rate of transmitted data (e.g., H.264/H.265 encoded video). An update rate may be, for example, 120 Hz or 60 Hz, thus resulting in a downlink traffic burst arrival periodicity of 8.333 ms or 16.667 ms, respectively. However, the first conventional DRX configuration 515 and the second conventional DRX configuration 520 may have one millisecond as the finest granularity for a DRX cycle, and the start of the ON-duration may be aligned to millisecond time boundaries.

In the example of Fig. 5, a 120 Hz update rate is illustrated for burst arrivals 505, thus resulting in an 8.333 ms periodicity for the downlink traffic bursts 510. In the event that the first conventional DRX configuration 515 is selected and an initial DRX cycle has an ON-duration that is aligned with the first downlink traffic burst 510-a, the second downlink traffic burst 510-b and the third downlink traffic burst 510-a will each also be within the subsequent two ON-durations. However, the fourth downlink burst 510-d would miss the fourth ON-duration, as it would occur 0.333 seconds after the end of the fourth ON-duration. If the second conventional DRX configuration 520 were to be selected instead, the result would be that the first downlink traffic burst 510-a would be aligned with an ON-duration, but subsequent downlink traffic bursts 510-b, 510-c, and 510-d would each miss the ON-duration.

Further, if the DRX configuration were to be modified to have a finest granularity corresponding to a slot or symbol, such misalignments may continue to occur due to the burst arrivals 505 having a periodicity that is not a multiple of a slot or symbol duration. For example, as the traffic burst interval (120 Hz or 60 Hz) expressed in milliseconds has a factor of 3 in the denominator, which cannot divide into the numerator (i.e., 1000 / 120 = X / 3, where X is an integer such as 25 for a 120 Hz update rate or 50 for 60 Hz update rate). More generally, if DRX cycle granularity can be defined in slots, the expression would be the number of slots in a second divided by the source update rate in Hz. Misalignments between the downlink traffic bursts 510 and ON-durations may add additional latency to communications, where the additional latency is cyclic. For example, in a first missed ON-duration of an 8 ms DRX configuration, the downlink traffic burst may be retransmitted at a next ON-duration, which occurs 7 ms later than the missed ON-duration. Subsequent downlink traffic bursts will have a lower latency, which reduces by 0.333 ms each cycle, until the downlink traffic bursts are again aligned with ON-durations in 21 cycles, with such alignment lasting for three cycles. Thus, the alignment and misalignment of downlink traffic bursts in such an example would be cyclic with a period of 24 cycles, and an average latency of about 3 ms. In some cases, to reduce the latency, the DRX cycle duration may be reduced, which also has a corresponding increase in power consumption due to the extra ON-durations. As a result, the XR device may consume additional processing resources.

As indicated above, Fig. 5 is provided as an example. Other examples may differ from what is described with regard to Fig. 5.

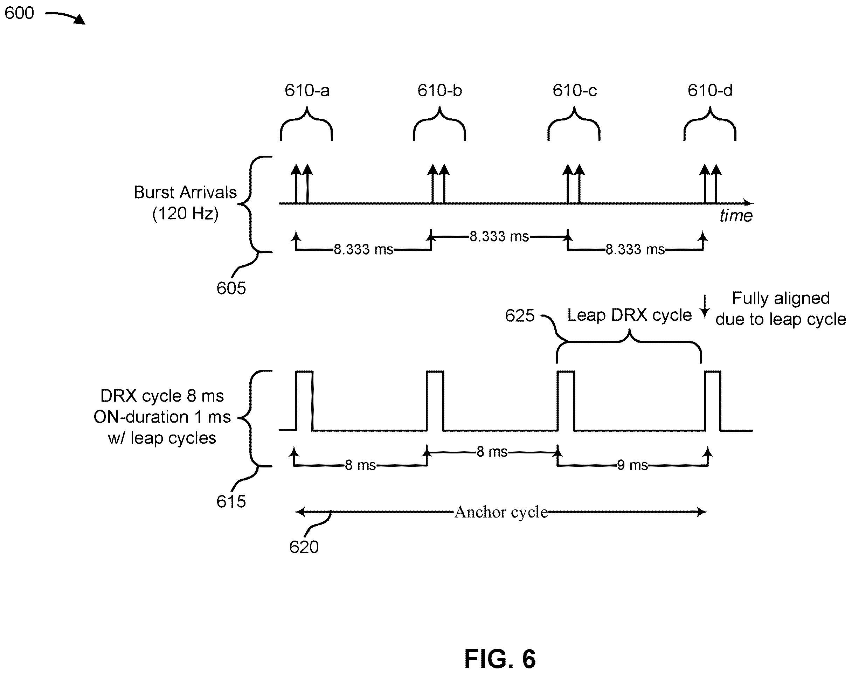

Fig. 6 illustrates an example 600 of an anchor cycle with a leap DRX cycle, in accordance with the present disclosure.

In some scenarios, a UE (e.g., XR device) and the network may use an anchor cycle with a leap DRX cycle to better align the DRX cycle to reduce latency and conserve energy consumption. For example, the UE and the network may implement an anchor cycle with a leap DRX cycle. Downlink traffic burst arrivals 605 may include a number of downlink traffic bursts 610 that are transmitted according to a periodic pattern. The downlink traffic bursts 610 may include, for example, XR downlink traffic that has a periodic pattern with a downlink traffic bursts 610 every 8.333 ms, for example. An anchor cycle 620 may, for example, span three DRX cycles 615, and the third DRX cycle may be a leap cycle 625 that has a longer cycle duration than the initial two DRX cycles. In some cases, the anchor cycle 620, which may be an example of a DRX period, may span more or fewer DRX cycles, and may include one or more leap cycles 625. The anchor cycle 620 may be used as a basis for determining timing for radio resource management (RRM) functions. In some cases, the leap cycle 625 may include one or more additional slots than other DRX cycles of the anchor cycle 620. The position of the leap cycle(s) 625 can be varied within the anchor cycle 620. While example 600 shows burst arrivals 605 associated with periodic traffic having a 120 Hz update rate and the anchor cycle 620 includes three DRX cycles with durations of 8 ms, 8 ms, and 9 ms, other configurations may be used for different periodicities or patterns of downlink traffic. For example, for periodic traffic with a 60 Hz update rate, an anchor cycle with three DRX cycles of 16 ms, 17 ms, 17 ms may be configured, or the three DRX cycles may have durations of 16 ms, 16 ms, 18 ms, respectively. The order of the leap cycle(s) 625 among the DRX cycles within the anchor cycle 620 may also be configured. For example, for 120 Hz update rate, DRX cycles with duration of (8 ms, 8 ms, 9 ms), (8 ms, 9 ms, 8 ms), or (9 ms, 8 ms, 8 ms) can be configured. Support for such varied options in the ordering may help with offsetting multiple users in time for their respective ON-durations, in order to better distribute utilization of resources over time.

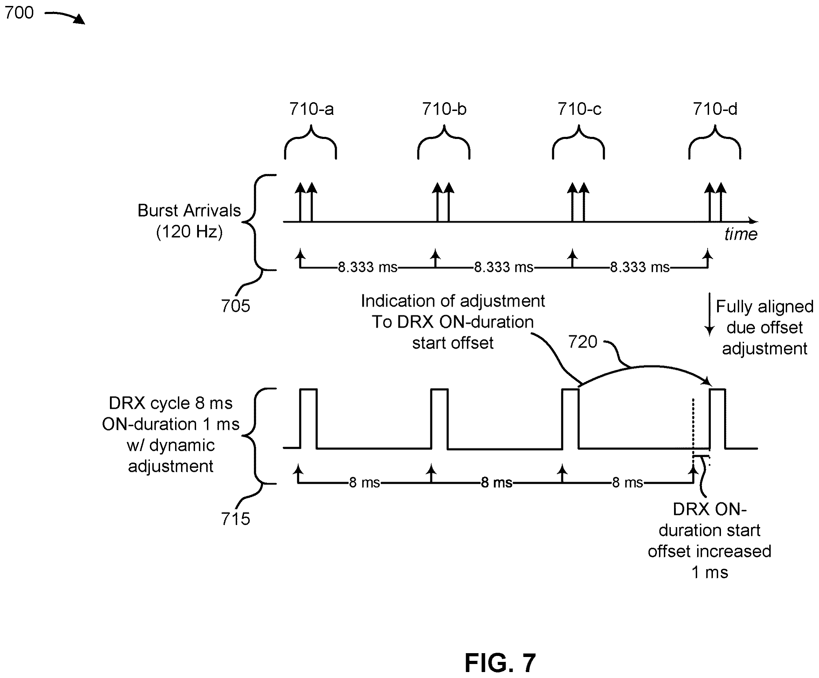

In some cases, a base station may configure a UE with a DRX configuration via radio resource control (RRC) signaling. For example, a base station may identify that periodic traffic is being transmitted to the UE (e.g., based on XR application traffic having a certain update rate, or based on historical downlink burst transmissions to the UE), and that the periodic traffic does not align with slot or subframe boundaries. The base station may determine the anchor cycle duration (e.g., based on a number of periods of the downlink traffic bursts 610 that correspond to millisecond time boundaries, such as three 8.333 ms periods that provide a 25 ms anchor cycle duration), a number of DRX cycles within the anchor cycle 620, and which of the DRX cycles are to have different cycle durations. In some cases, the RRC signaling may indicate the anchor cycle duration in milliseconds, the number of DRX cycles in the anchor cycle, and the cycle duration of each DRX cycle (e.g., 8, 8, 9). In some cases, the UE may signal to the base station that the UE has a capability to perform DRX procedures with non-uniform DRX cycles, and the base station may enable the capability when providing the DRX configuration. In other cases, non-uniform DRX cycles may be configured using other techniques, such as by adjusting a starting offset of an ON-duration of a DRX cycle, as discussed in connection with Fig. 7.

As indicated above, Fig. 6 is provided as an example. Other examples may differ from what is described with regard to Fig. 6.

Fig. 7 illustrates an example 700 of a DRX configuration with dynamic offset adjustment that supports DRX techniques with non-uniform cycle durations, in accordance with the present disclosure. Example 700 shows downlink traffic burst arrivals 705 that include a number of downlink traffic bursts 710 that are transmitted according to a periodic pattern. Example 700 also shows a DRX configuration 715 with non-uniform cycle durations.

The downlink traffic bursts 710 may include, for example, XR downlink traffic that has a periodic pattern with a downlink traffic bursts 710 every 8.333 ms. In example 700, DRX configuration 715 has a configuration with an 8 ms DRX cycle duration and a 1 ms ON-duration. In the initial DRX cycles of the downlink traffic bursts 710, the ON-duration may have a zero millisecond offset, such that the first downlink traffic burst 710-a, the second downlink traffic burst 710-b, and the third downlink traffic burst 710-c are aligned with ON-durations. A UE may make an adjustment 720 to the DRX ON-duration start offset following the third downlink burst 710-c, which may increase the ON-duration start offset by one millisecond in this example, such that the adjusted DRX ON-duration is aligned with the fourth downlink traffic burst 710-d. The UE may make another adjustment to the ON-duration offset back to the original offset following the fourth downlink traffic burst 710-d, and thus the DRX cycles may be configured to align ON-durations with downlink traffic bursts 710.

In some cases, the DRX ON-duration start offset adjustment can be predefined based on a specification, or defined in the DRX configuration (e.g., that is provided in RRC signaling). For example, different types of traffic (e.g., XR traffic) and different periodicities (e.g., based on a 120 Hz or 60 Hz update rate) DRX starting offsets may be defined according to a pattern such as in example 700 (e.g., every 4th DRX cycle has a 1 ms starting offset added). In some cases, the DRX starting offset may be dynamically indicated (e.g. based on MAC CE or DCI) in a prior downlink transmission.

As indicated above, Fig. 7 is provided as an example. Other examples may differ from what is described with regard to Fig. 7.

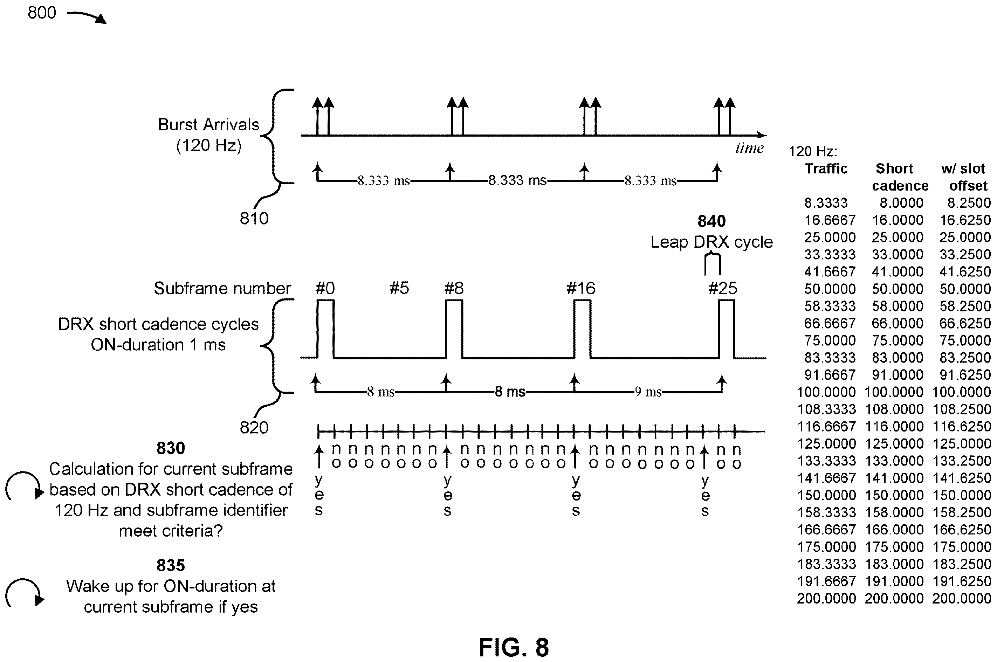

Fig. 8 is a diagram illustrating an example 800 of using a short cadence value for DRX, in accordance with the present disclosure. Example 800 shows traffic burst arrivals 810 that are arriving at a rate of 120 Hz.

The techniques described in connection with Figs. 3-7 may improve alignment of DRX cycles and XR traffic to reduce mismatches between burst traffic and DRX ON-duration times. However, according to various aspects described herein, a UE (e.g., an XR device) and the network may further improve such alignment by using a DRX short cadence that corresponds to a number of Hz (e.g., instances per second) rather than an integer ms value. The DRX short cadence value may correspond to a number of Hz, for example, by being defined by a number of Hz or by being defined by a value that is based on or derived from a number of Hz or a similar or related unit. The DRX short cadence (*drx-ShortCadence*) may be, for example, 45 Hz, 60 Hz, 90 Hz, or 120 Hz, so as to align ON-duration times of the UE with traffic bursts that are received by the UE according to a video frame rate. That is, the DRX short cadence value may be a DRX timing value that corresponds to a same time unit or frequency unit by which traffic bursts are received by the UE (e.g., video frame rate). Once the base station (e.g., gNB) obtains the frame rate of traffic bursts to the UE, or the periodicity of the traffic bursts to the UE, the base station may set the DRX short cadence value. The UE may receive the DRX short cadence value from the base station or obtain the DRX short cadence value based at least in part on the frame rate or the periodicity of the traffic.

The UE may use the DRX short cadence value to determine when to wake up for an ON-duration and decode physical downlink control channel (PDCCH) grants from the base station, as part of DRX short cadence cycles 820. The UE may determine when to wake up subframe by subframe, or slot by slot. For example, as shown by reference number 830, the UE may calculate, in the first part of a current subframe (having a subframe identifier n), whether specific criteria are satisfied for the current subframe. The criteria may be associated with the DRX short cadence value and subframe identifiers and may be designed such that subframes (or slots) that satisfy the condition align with a timing of the frame rate or the periodicity of the traffic bursts received by the UE. Each subframe may be 1 ms and include multiple slots (e.g., 2, 6, 8). The criteria may be associated with a system frame number (SFN). For a subframe with subframe identifier *n* = [(SFN * 10) + subframe number], the UE may wake up if a first ceiling value (smallest integer higher than calculated value) of (*n* * *drx-ShortCadence* / 1000) + 1 is equal to a second ceiling value of ((*n +* 1) * (*drx-ShortCadence* / 1000)). The SFN may be a number between 0 and 1023 of a frame, and the subframe number may be a number between 0 and 9 within the frame. For example, if the DRX cadence value is 120 Hz and the subframe has a subframe number of 5 in a frame with a SFN of 800, a subframe identifier *n* for the subframe may be (800 * 10) + 5, or 8005. A first ceiling value may be a smallest integer of (8005 * 120 / 1000) + 1, or 961. A second ceiling value may be a smallest integer of (8005 + 1) * (120 / 1000), or 960. The first ceiling value and the second ceiling value are not equal, and thus the UE does not satisfy the criteria and wake up for this subframe. However, a later subframe with a subframe number of 8, may render a first ceiling value of 961 (smallest integer of (8008 * 120 / 1000) + 1) and a second ceiling value of 961 (smallest integer of (8008 + 1) * (120 / 1000)), and thus the UE may satisfy the criteria and wake up during that subframe. The calculation may be performed at the start of each subframe. In some aspects, multiple calculations for multiple subframes may be made at one time.

In other words, the UE may satisfy some type of criteria that is associated with the DRX short cadence (corresponding to Hz) and a subframe identifier of the subframe that uniquely identifies the subframe among consecutive subframes within a cycle or time period. The criteria, or whatever is calculated for a given subframe, may be designed to use the DRX short cadence to wake up for subframes according to a frame rate or a periodicity of the traffic bursts received by the UE.

As shown by reference number 835, the UE may wake up for an ON-duration at the current subframe. When the UE wakes up, the UE may start a DRX ON-duration timer (*drx-onDurationTimer*)*.* The DRX ON-duration timer may be a minimum time duration that the UE is to be awake and may be, for example, 1 ms or 2 ms. For example, if the UE wakes up at subframe 8, and the DRX ON-duration timer is 2 ms, the UE may stay awake through subframes 8 and 9. If there is no more traffic, the UE may go back to sleep. In example 800, the DRX ON-duration timer is 1 ms. The DRX ON-duration timer may be started for a DRX group.

In some aspects, there may be a leap of 1 subframe every specified number of cycles, similar to the leap-cycle technique described in connection with Fig. 6. For example, for a cycle of 8 ms, there may be a leap of 1 subframe (1 ms) every 3 cycles to accommodate the 1/3 subframe part when the duty cycle is 8.333 ms for 120 Hz. That is, for a DRX short cadence of 120 Hz, the UE may determine to wake up for subframe *n* = 8, 16, 25, 33, 41, 50, and so forth. As shown by reference number 840, after waking up at subframes 8 and 16, instead of subframe 24, the UE may leap 1 subframe to wake up at subframe 25. If example 800 were to continue to show ON-duration subframes, the UE may then wake up 8 ms later at subframe 33, and another 8 ms later at subframe 41. Instead of waking up 8 ms later at subframe 49, the UE may leap 1 subframe and wake up at subframe 50. In some aspects, the UE may skip calculations for one or more subframes after an ON-duration until the next possible ON-duration approaches.

In some aspects, the UE may use a DRX start offset and/or a DRX slot offset to provide for more granularity as to when to wake up within a subframe, in order to more closely align with the traffic periodicity of the UE. The UE may wake up and start a DRX ON-duration timer after a DRX start offset (*drx-StartOffset*) from a beginning of the subframe *(n + drx-StartOffset*) and/or a DRX slot offset (*drx-SlotOffset*). The DRX start offset may be a number of ms or microseconds (µs) (or set to zero ms or µs for no DRX start offset), symbols, or mini-slots. The DRX start offset may be used to stagger multiple UEs in time. The DRX slot offset may be a number of slots. For example, if there are 8 slots in a subframe (such as for mmWave), each slot is 125 µs or .125 ms. If the DRX slot offset is 2 slots, the wake up time is shifted (2 * .125) or .250 ms. If wake up times, according to 120 Hz, were 8 ms, 16 ms, 25 ms, 33 ms, 41 ms, 50 ms, and so forth, the UE may use the DRX slot offset to better match the traffic bursts at 8.33 ms, 16.66 ms, and 25 ms by using a DRX slot offset of 2 slots at subframe 8 for 8.250 ms, a DRX slot offset of 5 slots at subframe 16 for 16.625 ms, no DRX slot offset at subframe 25 for 25.000 ms, and so forth, such as shown by the table for 120 Hz in Fig. 8. As a result, the UE may better align the DRX cycle and the traffic period to further reduce latency and conserve signaling resources.

As indicated above, Fig. 8 is provided as an example. Other examples may differ from what is described with regard to Fig. 8.

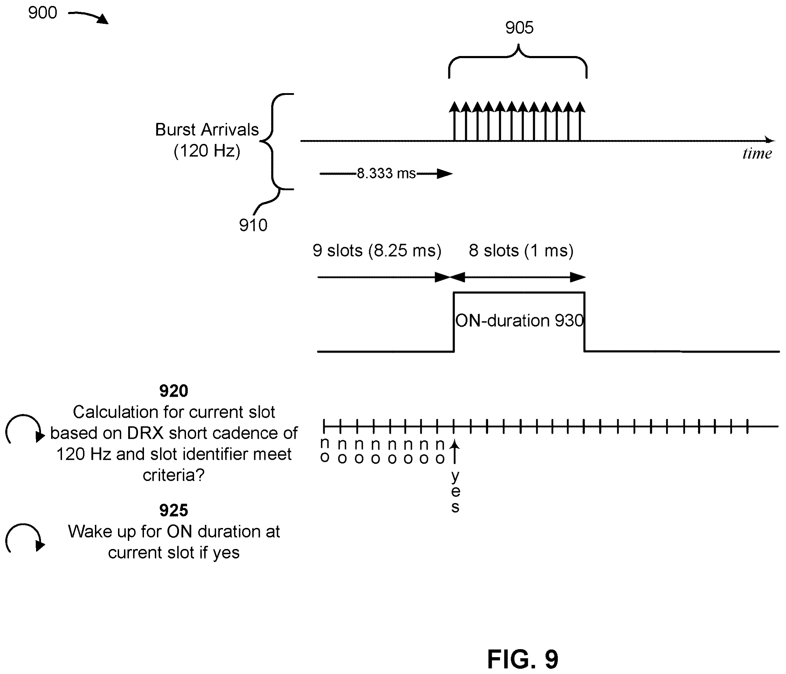

Fig. 9 is a diagram illustrating an example 900 of using a short cadence value for DRX for slot positions, in accordance with the present disclosure. Example 900 shows a traffic burst 905 among multiple burst arrivals 910 that arrive at a rate of 120 Hz. The burst arrivals 910 in example 900 may be the same as the burst arrivals 810 shown in example 800 of Fig. 8, except that the timeline in example 900 is magnified in order to show multiple slots for a subframe.

In some aspects, the calculations per subframe that are based on a subframe identifier may be extended to slot positions, with a slot identifier *k*. That is, the criteria for waking up may be based at least in part on slot identifier *k* being equal to (((SFN * 10) + subframe number) * slots per second) + a slot number. The UE may wake up and start a DRX ON-duration timer at slot *k* if a first ceiling value of (*k * drx-ShortCadence* / 1000 * slots per second) + 1 is equal to a second ceiling value of ((*k +* 1) *** (*drx-ShortCadence* / 1000 * slots per second)). The calculations may be per slot rather than per subframe. As shown by reference number 920, the UE may determine if a calculation for a current slot, based at least in part on the DRX short cadence and the slot identifier, satisfies the criteria for waking up. As shown by reference number 925, if the UE is to wake up, the UE may wake up for the ON-duration 930, which may be a subframe or 8 slots. In some aspects, the calculation may be performed all at once at a beginning of a subframe. In other words, the UE may satisfy some criteria that is associated with the DRX short cadence value (corresponding to Hz) and a slot identifier of the slot that uniquely identifies the slot among consecutive slots within a cycle or time period. The criteria, or whatever is calculated for a given slot, may be designed to use the DRX short cadence value to wake up for slots according to a frame rate or a periodicity of the traffic bursts to the UE. In some aspects, the UE may skip calculations for one or more slots or subframes after the ON-duration.

In some aspects, the UE may wake up and start a DRX ON-duration timer after a DRX start slot offset (*drx-StartSlotOffset*) from a beginning of the subframe *(n* +*drx-StartOffset*)*.* The DRX start slot offset may be a number of ms, microseconds (µs) (or set to zero ms or µs for no DRX start offset), symbols, slots, or mini-slots. The DRX start slot offset may be used to stagger the UE and the other UEs in time. The DRX start slot offset may be updated based at least in part on how many UEs are transmitting, how long the UEs are staying, and if there are changes to UE behavior.

As indicated above, Fig. 9 is provided as an example. Other examples may differ from what is described with regard to Fig. 9.

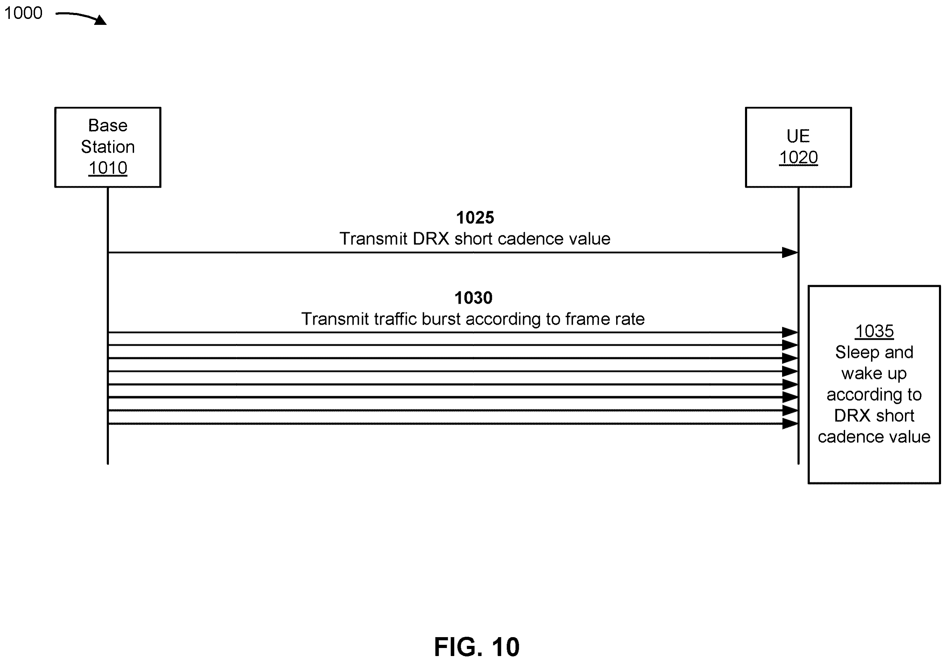

Fig. 10 is a diagram illustrating an example 1000 of using a short cadence value for DRX, in accordance with the present disclosure. As shown in Fig. 10, a base station 1010 (e.g., base station 110) may communicate with a UE 1020 (e.g., UE 120). The base station 1010 and the UE 1020 may be part of a wireless network (e.g., wireless network 100).

The UE 1020 may obtain a DRX short cadence value (DRX short cycle value), which may be defined as a number of Hz. As shown by reference number 1025, the base station 1010 may transmit the DRX short cadence value to the UE 120. The UE 1020 may also obtain the DRX short cadence value from stored configuration information. For example, the UE 1020 may select a DRX short cadence value from among multiple DRX short cadence values based at least in part on a determined periodicity of traffic bursts (e.g., video frame rate) transmitted by the base station 1010, as shown by reference number 1030.

As shown by reference number 1035, the UE 1020 may sleep and wake up according to the DRX short cadence value. For example, the UE 1020 may calculate, for each subframe, whether a subframe identifier causes the UE 1020 meet the criteria for waking up, based at least in part on the DRX short cadence value. The DRX short cadence value *(drx-ShortCadence)* may be, for example, 120 Hz, and subframe identifier *n* = [(SFN * 10) + subframe number]. If the subframe identifier *n* = 7, ceil(*n* * *drx-ShortCadence* / 1000) + 1 = 2 and ceil((n + 1) ** drx-ShortCadence* / 1000) = 1. As 2 does not equal 1, the criteria are not satisfied (condition is false). If the subframe identifier *n* = 8, ceil(*n* * *drx-ShortCadence* / 1000) + 1 = 2 and ceil((*n* + 1) * *drx-ShortCadence* / 1000) = 2. As 2 equals 2, the criteria are satisfied (condition is true). If the subframe identifier *n* = 9, ceil(n ** drx-ShortCadence* / 1000) + 1 = 3 and ceil((n + 1) ** drx-ShortCadence* / 1000) = 2. As 3 does not equal 2, the criteria are not satisfied (condition is false). In some aspects, the UE 1020 may use a leap cycle, a slot offset, a timing offset, or any other technique described herein to better match the periodicity of the traffic bursts. The UE 1020 may start an ON-duration timer as part of waking up.

In some aspects, the UE 1020 may perform the calculation for each slot, to determine whether a slot identifier causes the UE 1020 meet the criteria for waking up, based at least in part on the DRX short cadence value. The DRX short cadence value *(drx-ShortCadence)* may be, for example, 120 Hz, and slot identifier *k* = [((SFN * 10 + subframe number) * slots per second) + slot number]. The slots per second (*slotPerSec*) for 120 Hz may be 8 slots per second. If the slot identifier *k* = 8 * 8 + 1, ceil(k * *drx-ShortCadence* / (1000 * *slotPerSec*)) *+* 1 = 2 and ceil((*k* + 1) * *drx-ShortCadence* / (1000 * *slotPerSec*)) *=* 1. As 2 does not equal 1, the criteria are not satisfied (condition is false). If the slot identifier *k* = 8 * 8 + 2, ceil(k * *drx-ShortCadence* / (1000 * *slotPerSec)) +* 1 = 2 and ceil((*k* + 1) ** drx-ShortCadence* / (1000 ** slotPerSec*)) = 2. As 2 equals 2, the criteria are satisfied (condition is true). If the slot identifier *k* = 8 * 8 + 3, ceil(k * *drx-ShortCadence* / (1000 * *slotPerSec*)) *+* 1 = 3 and ceil((*k* + 1) * *drx-ShortCadence* / (1000 * *slotPerSec*)) *=* 2. As 3 does not equal 2, the criteria are not satisfied (condition is false). In some aspects, the UE 1020 may use a leap cycle, a slot offset, a timing offset, or any other technique described herein to better match the periodicity of the traffic bursts.

As indicated above, Fig. 10 is provided as an example. Other examples may differ from what is described with regard to Fig. 10

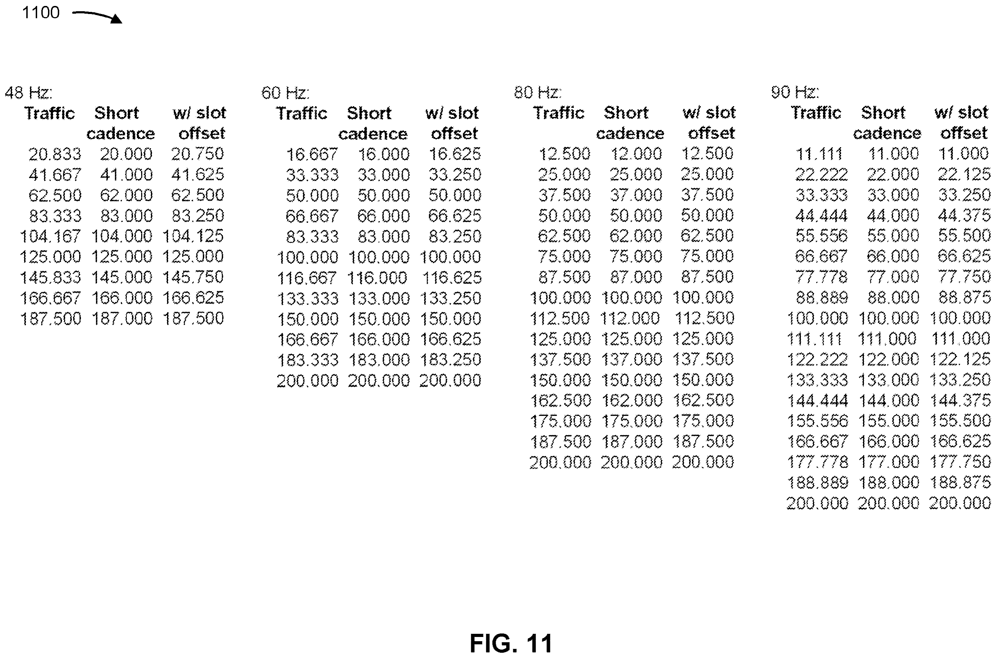

Fig. 11 is a diagram illustrating an example 1100 of using different short cadence values, in accordance with the present disclosure. Fig. 11 shows tables for different DRX short cadence values, including for 48 Hz, 60 Hz, 80 Hz, and 90 Hz to match corresponding frame rates of 48 Hz, 60 Hz, 80 Hz, and 90 Hz. Similar to the table for 120 Hz in fig. 8, the first column in each table of Fig. 11 indicates the periodicity of traffic bursts (ms between traffic bursts - corresponding to a frame rate/short cadence value). The second column in each table indicates the wake up time (in ms) when the criteria is satisfied for the short cadence value, so as to match the periodicity in the first column. The third column indicates (in ms) the wake up time when using a slot offset (e.g., increments of .125 ms) in order to more closely match the periodicity indicated in the first column.

In other words, the UE may calculate, based at least in part on a subframe identifier for a subframe (or a slot identifier for a slot) and a DRX short cadence value of 48 Hz, 60 Hz, 80 Hz, 90 Hz, or 120 Hz, whether the subframe (or the slot) satisfies a criteria for waking up. The criteria may be designed such that the UE wakes up starting at a subframe and/or a slot that is a closest match or alignment for a traffic burst according to the periodicity of the traffic bursts. The UE may use a slot offset to closely match the periodicity. In this way, the UE more closely matches wake up times with traffic bursts so as to conserve power and processing resources while not missing any traffic bursts during an ON-duration time. The UE may adjust the ON-duration time as necessary in coordination with the short cadence value and/or the slot offset value. Note that other DRX short cadence values may be used to match frame rates of 45 Hz, 75 Hz, or other frame rates used for applications or services that are not explicitly listed herein.

As indicated above, Fig. 11 is provided as an example. Other examples may differ from what is described with regard to Fig. 11.

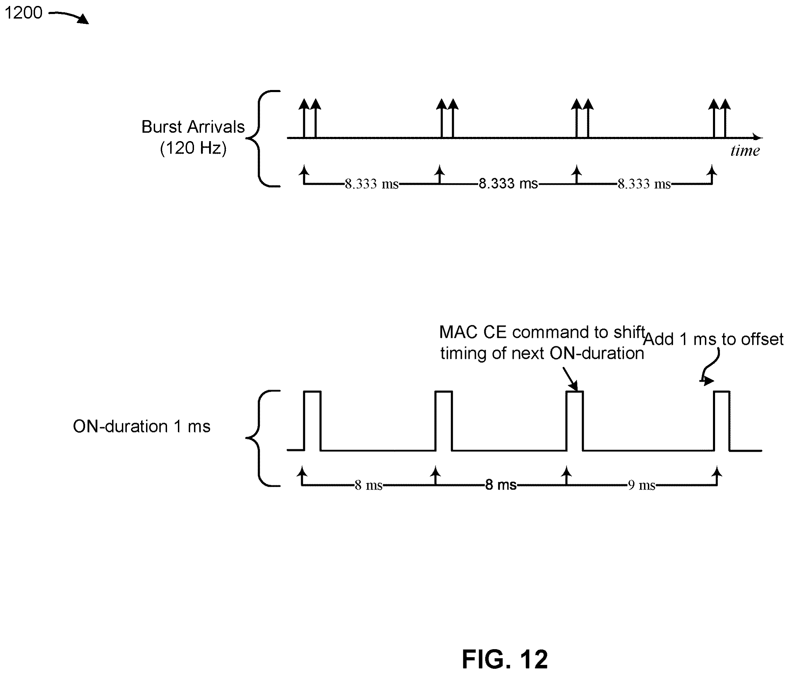

Fig. 12 is a diagram illustrating an example 1200 of using a short cadence value for DRX, in accordance with the present disclosure. Example 1200 shows traffic burst arrivals that are arriving at a rate of 120 Hz.

There are additional solutions for better matching of a multimedia cadence as part of an enhanced connected mode DRX (EC-DRX). In one scenario, a base station may detect that an offset between ON-duration occasions needs to be changed, in order to better match the arrival time of the next data burst. In some aspects, the base station may transmit a MAC CE to a UE in order to signal a change of an offset between ON-duration occasions. For example, the MAC CE may indicate that the next offset is to be increased by 1 ms, or to shift from 8 ms to 9 ms. The MAC CE may indicate an offset value from a list of absolute values or a quantity of slots to shift an offset (from a relative value list).

As indicated above, Fig. 12 is provided as an example. Other examples may differ from what is described with regard to Fig. 12.

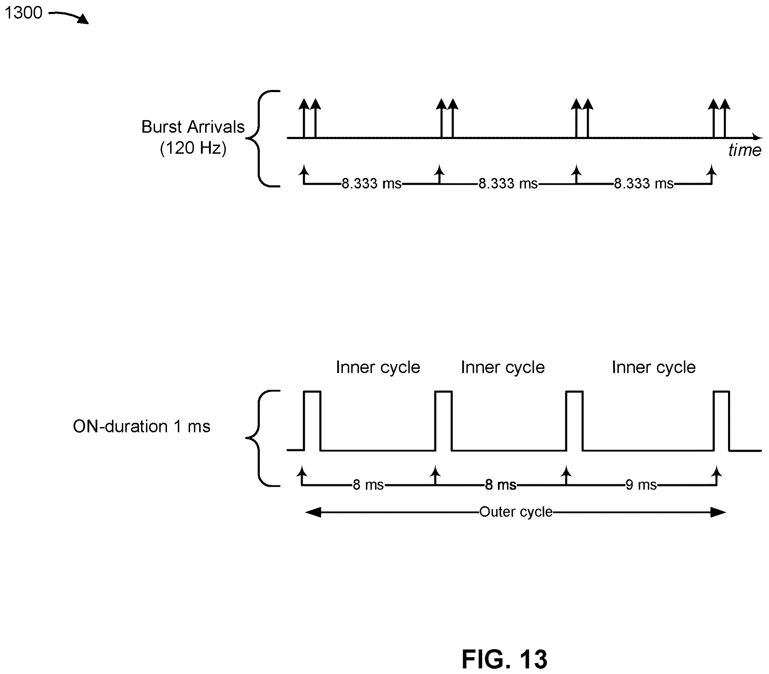

Fig. 13 is a diagram illustrating an example 1300 of using a short cadence value for DRX, in accordance with the present disclosure. Example 1300 shows traffic burst arrivals that are arriving at a rate of 120 Hz.

DRX may involve a short DRX cycle. If the short DRX cycle is used for a DRX group, where [(SFN × 10) + subframe number] modulo *(drx-ShortCycle)* = (drx-StartOffset) modulo *(drx-ShortCycle),* the UE may start *drx-onDurationTimer* for this DRX group after *drx-SlotOffset* from the beginning of the subframe. [(SFN × 10) + subframe number] may define the subframe index for DRX cycle. The parameter *drx-ShortCycle* may define the subframe periodicity of an ON-duration cycle, and the parameter *drx-StartOffset* may define the subframe offset of an ON-duration cycle.

DRX may involve a long DRX cycle. If the long DRX cycle is used for a DRX group, where [(SFN × 10) + subframe number] modulo (*drx-LongCycle*) *= drx-StartOffset,* the UE may start *drx-onDurationTimer* for this DRX group after *drx-SlotOffset* from the beginning of the subframe.

In some aspects, a two-level DRX configuration may define an outer DRX cycle and an inner DRX cycle to structure a leap DRX cycle. The outer DRX may be the same as legacy DRX, which supports only uniform DRX. The inner DRX may support sub-cycles that can be non-uniform. The start of the first inner DRX cycle may be aligned to the start of the outer DRX, and the end of the last inner DRX cycle may be aligned to the end of the outer DRX. The ON-duration, an inactivity timer, and other DRX parameters for configuration for the inner DRX cycles can be the same as that of the outer DRX cycle. If the outer DRX cycle is configured to be 25 ms as an "anchor-cycle" that depends on the DRX subframe index of [(SFN × 10) + subframe number], the inner DRX cycles may be configured to be (8,8,9) ms for a set of sub-cycles for ON-duration.

In some aspects, the start of the ON-duration may be defined with respect to the short DRX cycle and the long DRX cycle. The short DRX cycle may be defined as [(SFN × 10) + subframe number] modulo *(drx-ShortCycle)* = (*drx-StartOffset*) modulo *(drx-ShortCycle).* The long DRX cycle may be defined as [(SFN × 10) + subframe number] modulo (*drx-LongCycle*) *= drx-StartOffset.*

As indicated above, Fig. 13 is provided as an example. Other examples may differ from what is described with regard to Fig. 13.

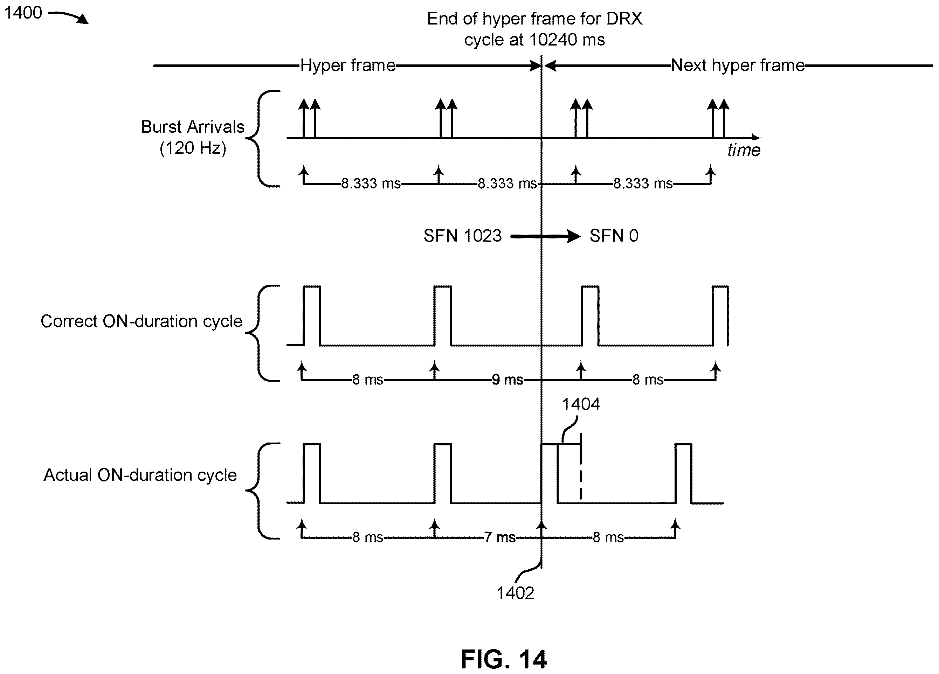

Fig. 14 is a diagram illustrating an example 1400 of an SFN wraparound, in accordance with the present disclosure. Example 1400 shows multimedia data burst arrivals that are arriving at a rate of 120 Hz. In example 1400, *drx-StartOffset* is set to 0.

A UE may configure a DRX cycle for a cadence of data bursts, such as every 8.33 ms at 120 Hz, but the cadence of the data bursts may be associated with a periodicity of 1000 ms. With a multimedia periodicity of 1000 ms and a DRX cycle of 10,240 ms (1024 SFNs per hyper frame at 10 ms each), the hyper frame of the DRX may be misaligned with a frame of a multimedia server every 10.24 seconds. There is a drift 1404 of 1.666 ms (2 ms in example 1400) every 10.24 sec (10,240 ms) due to the misalignment between the hyper frame periodicity (10240 ms) and the multimedia periodicity. In other words, the hyper frame periodicity (10,240 ms) cannot be divided by the multimedia periodicity (Hz, fps). In an example of 120 Hz XR traffic, 10,240 ms / (1000/120) ms = 1228.8 frames. The fractional part of 0.8 (or 1 - 0.8 = 0.2) is the remaining partial frame at the end of the hyper frame, and this partial frame causes an SFN wraparound problem in the next hyper frame.

Example 1400 shows an end of the hyper frame (at SFN 1023) and a beginning of the next hyper frame (at SFN 0), or when the SFN numbers wrap around or restart for the next hyper frame. When the end of the hyper frame 1402 is reached, an ON-duration formula, such as (SFN * 10) + subframe number = 0, may select a subframe for an ON-duration that is between data bursts due to the SFN wraparound. Because the subframe may not be aligned with a data burst, the data burst may not be received. This may cause a degradation of communications that could consume additional processing resources and signaling resources.

As indicated above, Fig. 14 is provided as an example. Other examples may differ from what is described with regard to Fig. 14.

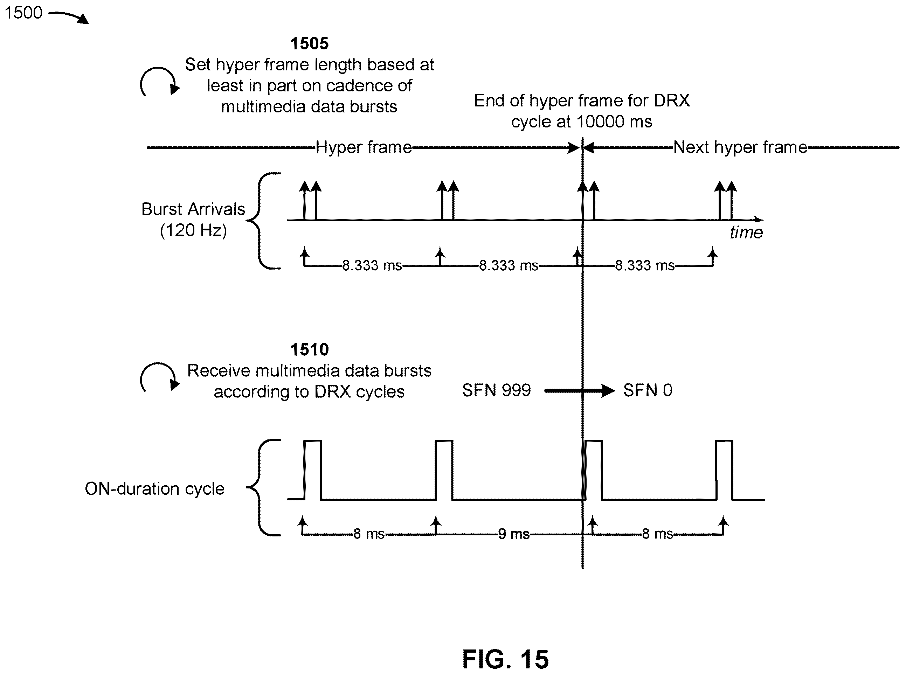

Fig. 15 is a diagram illustrating an example 1500 of setting a hyper frame length, in accordance with the present disclosure. Example 1500 shows multimedia data burst arrivals that are arriving at a rate of 120 Hz.

According to various aspects described herein, a network entity (e.g., base station 110) may configure a UE (e.g., UE 120) to set a hyper frame length that is based at least in part on the cadence of the multimedia data bursts, as shown by reference number 1505. The cadence of the multimedia data bursts may correspond to a number of Hz, and a number of frames forming the hyper frame length may be a multiple of a time periodicity of the number of Hz. For example, the UE may set the hyper frame length to be 1000 SFNs rather than 1024 SFNs, such that there is no SFN wraparound at the end of a hyper frame that would misalign ON-duration occasions that are calculated in the next hyper frame. The hyper frame length may also be 1000 frames or 10000 subframes. In some aspects, the UE may maintain an SFN counter for a hyper frame and reset the SFN counter for a next hyper frame upon reaching the hyper frame length (end of the hyper frame). The UE may initialize the SFN counter with a current SFN. The SFN counter increases when the SFN is updated. As a result of setting a hyper frame length to match a cadence or periodicity of the multimedia data bursts, there will not be a misalignment and frequent drift of the timing when the UE receives the multimedia data bursts, as shown by reference number 1510. By adjusting a hyper frame length, the UE may align ON-duration occasions with data bursts to improve communications and cause the UE to avoid consuming additional processing resources and signaling resources. In some aspects, the network entity may select the hyper frame length and transmit the hyper frame length in configuration information.

The UE may use the set hyper frame length by performing a modulo operation with the hyper frame length to determine subframe identifiers of DRX ON-duration subframes for receiving the multimedia data bursts, and the DRX cycle may be configured for a cadence of the multimedia data bursts. For example, if a subframe identifier *n* for calculating an ON-duration subframe was previously determined, with *n* = [(SFN × 10) + subframe number], the UE may now determine the subframe identifier *n* with *n =* [(SFN_M × 10) + subframe number], where SFN_M is the SFN after a modulo operation with the set hyper frame length (in SFNs). For example, for a given subframe in sequence *N =* 50000, subframe identifier *n* for an ON-duration formula would be 50000 mod 10240, or 9040, with a hyper frame length of 1024 frames (SFN_M = 1024). By contrast, for a given subframe N = 50000, *n* would be 50000 mod 10000, or 0, with a hyper frame length of 1000 frames (SFN_M = 1000), for the ON-duration formula.

In some aspects, the ON-duration formula for waking up from an ON-duration sleep cycle may include waking up, starting at a subframe, based at least in part on a subframe identifier of the subframe and a DRX cycle periodicity that corresponds a multiple of a multimedia periodicity (inverse of multimedia cadence in a number of Hz). For example, a formula may be [(SFN × *numberOfSubframesPerFrame*) + subframe number in the frame] = [*timeReferenceSFN* × *numberOfSubframesPerFrame + drx-StartOffset +* floor(*N* × 1000 / *drx-ShortCadence*)] modulo (1024 × *numberOfSubframesPerFrame*). *N* may be a value that is used for sequentially searching for DRX cycle ON-durations. *N* increments by one for each ON-duration occasion. There is no SFN wraparound with sequential searching value *N*. The parameter *drx-timeReferenceSFN* may provide an SFN that may be used to offset a resource or start a hyper frame. The UE may use the closest SFN with the indicated number preceding the reception of the ECDRX configuration. In some aspects, the ceiling of (*N* × 1000 / *drx-ShortCadence*) may be used instead of the floor. (*drx-SlotOffset* / *32* × *numberOfSlotsPerSubframe*) may indicate the slot offset value in slots when drx-SlotOffset is the value in 1/32 ms, and the ceiling operation may be used instead of the floor. The terms *drx-ShortCadence* and *drx-ShortCycle* may have a relationship such as *drx-ShortCycle* (ms) = 1000 / *drx-ShortCadence* (fps).

In some aspects, the formula may be [(SFN × *numberOfSubframesPerFrame*) + subframe number in the frame] = *[timeReferenceSFN* × *numberOfSubframesPerFrame + drx-StartOffset*(*i*) *+* N × *drx-ShortCycle*] modulo (1024 × *numberOfSubframesPerFrame*).

There may be multiple DRX offsets. The index *i* may be used to indicate one of the multiple DRX start offsets (*drx-StartOffset*(*i*)) and/or multiple DRX slot offsets (*drx-StartOffset*(*i*))*.* Index *i* may be an integer in an RRC information element (e.g., 0 to 10239 for *drx-StartOffset*(*i*), 0 to 31 for *drx-SlotOffset*(*i*))*.* The *drx-SlotOffset* may have a value of, for example, 1/32 ms for 480 kilohertz (KHz) subcarrier spacing (SCS). In one example, three DRX start offsets may be defined within *drx-ShortCycle, i =* [0, 1, 2], and *drx-StartOffset* may be defined for each *i.* In this example, with a multimedia cadence of 120 Hz, *drx-ShortCycle =25, drx-StartOffset*(0) *= 0, drx-StartOffset*(1) *=* 8, and *drx-StartOffset*(2) *=* 16. Also, *drx-SlotOffset*(0) *= 0, drx-SlotOffset*(1) *=* 0, *drx-SlotOffset*(2) *=* 0. Any of the three values of *drx-StartOffset*(*i*) and *drx-SlotOffset*(i) will activate the *drx-onDurationTimer.*

There may be multiple DRX start offsets (e.g., unit: subframe, 1 ms) within the *drx-ShortCycle.* For any *i,* the *drx-onDurationTimer* for a DRX group may start after *drx-SlotOffset*(i) from the beginning of the subframe. The set of multiple *drx-StartOffsets* and *drx-SlotOffsets* may be configured within *drx-ShortCycle,* and *drx-ShortCycle* may be set with any integer numbers.

In some aspects, *drx-timeReferenceSFN* may be an enumerated value, such as sfn512, that indicates the SFN used for determination of the offset of a time domain resource. The UE may use the closest SFN with the indicated number preceding the reception of the ECDRX configuration. If *timeReferenceSFN* is not present, *timeReferenceSFN* may be 0.

In some aspects, at a slot level, an ON-duration formula may be [(SFN × *numberOfSlotsPerFrame)* + slot number in the frame] = [*timeReferenceSFN* × *numberOfSlotsPerFrame + drx-StartOffset* × *numberOfSlotsPerSubframe + floor*(drx-*SlotOffset* / *32* × *numberOfSlotsPerSubframe*) + floor(N × *numberOfSlotsPerSubframe* × 1000 / *drx-ShortCadence*)] modulo (1024 × *numberOfSlotsPerFrame*). *drx-SlotOffset* may be the value in 1/32 ms. In some aspects, the ceiling of (*N* × *numberOfSlotsPerSubframe* × 1000 / *drx-ShortCadence*) may be used instead of the floor.

In some aspects, the formula may be [(SFN × *numberOfSlotsPerFrame)* + slot number in the frame] = [*timeReferenceSFN* × *numberOfSlotsPerFrame + drx-StartOffset*(*i*) × *numberOfSlotsPerSubframe* + floor(drx-SlotOffset(i) / 32 × *numberOfSlotsPerSubframe*) *+ N* × *drx-ShortCycle*] modulo (1024 × *numberOfSlotsPerFrame*). For any *i, drx-onDurationTimer* may start for a DRX group at the beginning of the slot. DRX timers (e.g., *drx-InactivityTimer, drx-HARQ-RTT-Timer*) may be set with the granularity of the slot. In an example with a multimedia cadence of 120 Hz (30 kHz SCS (0.5 ms), *drx-ShortCycle =* 25 × 2 slots, *drx-StartOffset*(0) = 0, *drx-StartOffset*(1) *=* 8, and *drx-StartOffset*(2) *=* 16.

In some aspects, the formula may be [(SFN × *numberOfSlotsPerFrame)* + slot number in the frame] = [*timeReferenceSFN* × *numberOfSlotsPerFrame + drx-StartOffset*(*i*) *+ N* × *drx-ShortCycle*] modulo (1024 × *numberOfSlotsPerFrame*). *drx-StartOffset* may be set with the granularity of a slot. The value of *drx-StartOffset*(*i*) may be an integer between 0 and 327647, for example. The unit for the multiple DRX start offsets with the *drx-ShortCycle* may be a slot, and *drx-SlotOffset* may be merged into *drx-StartOffset.* In an example with a multimedia cadence of 120 Hz (30 kHz SCS (0.5 ms), *drx-ShortCycle =* 25 × 2 slots, *drx-StartOffset*(0) *=* 0 slots, *drx-StartOffset*(1) *=* 8 × 2 slots, and *drx-StartOffset*(2) *=* 16 × 2 slots.

In some aspects, a sequential search DRX cycle formula may involve a rational number for drx-ShortCycle. The formula may be [(SFN × *numberOfSubframesPerFrame*) + subframe number in the frame] = [*timeReferenceSFN* × *numberOfSubframesPerFrame + drx-StartOffset +* floor(*N* × *drx-ShortCycle*)] modulo (1024 × *numberOfSsubframesPerFrame*). In some aspects, a ceiling of (*N* × *drx-ShortCycle*)] may be used.

In some aspects, the *drx-ShortCycle* may be indicated in an RRC information element (IE) and may be an enumerated value such as ms8and1Over3, ms11and1Over9, ms12and1Over2, ms16and2Over3, ms20and5Over6, ms22and2Over9, ms33and1Over3, or ms41and2Over3. These represent rational numbers associated with DRX cycle periodicity. A rational number may represent a non-integer value for *drx-ShortCycle* and thus ms8and1Over3 is associated with 120 fps XR traffic. In this example with a multimedia cadence *(drx-ShortCadence)* of 120 fps or 120 Hz, *drx-ShortCycle =* ms8and1Over3 and *drx-StartOffset =* 0. That is, with *drx-ShortCycle* (ms) = 1000 / *drx-ShortCadence* (fps) and *drx-ShortCadence =* 120, *drx-ShortCycle =* 1000 / 120 = 25/3 = 8+1/3 (ms8and1Over3). In another example where *drx-ShortCadence =* 60 fps or 60 *Hz, drx-ShortCycle =* 1000 / 60 = 50/3 (16and2Over3).

The network entity may configure the UE with the hyper frame length, such as with an additional information element in an RRC message (e.g., *drx-initialSFN*). The network entity may transmit an RRC message with a DRX short cadence value (e.g., *drx-ShortCadence*) that is an integer between 1 and 1000, for example. The network entity may transmit an RRC message with a DRX SFN modulo (e.g., *drx-SFNModulo*) value that is less than 1024 SFNs, such as between 1 and 1023. The network entity may transmit an RRC message indicating an initial value of SFN_M (e.g., *drx-initialSFN*), which may be between 0 and 1023 SFNs. The network entity may transmit a MAC CE indicating an initialization value or timing of SFN_M, or any other such values.

This new SFN_M value, or otherwise setting the hyper frame length based at least in part on the cadence of the multimedia data bursts, may be used with other solutions for aligning ON-duration occasions with multimedia data bursts, as described in connection with Figs. 6-13. For example, the UE may set a new hyper frame length (and use SFN modulo the new hyper frame length, or *n* = [(SFN_M × 10) + subframe number]) in calculations for outer DRX cycles in two-level DRX configuration and calculations for a short DRX cycle and a long DRX cycle. In some aspects, a MAC entity may consider that a sequential *N*^{th} ON-duration cycle occurs in a subframe for which [(SFN × *numberOfSubframesPerFrame*) + subframe number in the frame] = [*timeReferenceSFN* × *numberOfSubframesPerFrame + drx-StartOffset + drx-PeriodicOffset*(*N*)] modulo (1024 × *numberOfSubframesPerFrame*). The *drx-PeriodicOffset*(0) = 0 when *N =* 0, and the *drx-PeriodicOffset*(*N*) *= drx-PeriodicOffset*(*N*-1) *+ drx-ShortCycleList*{(*N*-1) modulo SIZE(*drx-ShortCycleList*)}, when *N* > 0. The UE may start *drx-onDurationTimer* for this DRX group after *drx-SlotOffsetList*{*(N-1) modulo SIZE(drx-SlotOffset)*} from the beginning of the subframe. The *drx-timeReferenceSFN* may provide the SFN used for determination of the offset of a resource in a time domain. The UE may use the closest SFN with the indicated number preceding the reception of the DRX configuration. The *drx-ShortCycleList* may be or may be associated with a set of non-uniform DRX short cycles (values in 1ms, e.g. *drx-ShortCycleList =* (8,8,9) for 120 Hz). The *drx-SlotOffsetList* may be or may be associated with a set of DRX slot offsets. The *drx-ShortCycleList* may be a sequence with a size of 1 to *maxNrofShortCycle* (maximum number of short cycles) of *drx-ShortCycle-r18.* The *drx-ShortCycle-r18* may be a value in 1 ms (subframe) between 1 and 640. The *drx-StartOffset* may be value in 1 ms (subframe) between 0 and 10239. This may come from *drx-LongCycleStartOffset* (cf. 1024 (SFN) x 10 (Subframes) = 10240). A *drx-SlotOffset* may be a value in 1/32ms (480 kHz SCS) between 1 and 31. The *drx-timeReferenceSFN* may be an enumerated value, such as SFN 512. If *timeReferenceSFN* is not present, *timeReferenceSFN* is 0.

In some aspects, a MAC entity may consider that a sequential *N*^{th} ON-duration cycle occurs in a slot for which [(SFN × *numberOfSlotsPerFrame*) + slot number in the frame] = [*timeReferenceSFN* × *numberOfSlotsPerFrame + drx-StartOffset* x *numberOfSlotsPerSubframe + floor(drx-SlotOffset* / *32* x *numberOfSlotsPerSubframe*) *+ drx-PeriodicOffset*(*N*)] modulo (1024 × *numberOfSlotsPerFrame).* The *drx-PeriodicOffset*(0) = 0 when *N =* 0, and *drx-PeriodicOffset*(*N*) *= drx-ShortCycleList* {*(N-*1) modulo SIZE(*drx-ShortCycleList)} + drx-PeriodicOffset*(*N*-1) when *N* > 0. The *drx-ShortCycleList* may be a set of non-uniform DRX short cycles (values in slots). The *drx-ShortCycle-r18* may be a value in slots between 1 and 20479. The UE may start the *drx-onDurationTimer* for this DRX group from the beginning of the slot.

In some aspects, the network entity may transmit DCI or a MAC CE command that compensates for a subframe index misalignment shift (DRX cycle drift) due to an SFN wraparound. The network entity may indicate a value to shift a timing of the DRX cycle based at least in part on an indicated shift, such as a 240 subframe (240 ms) shift, a 10,240 subframe (10,240 ms) shift, or a specific timing drift (2 ms in Example 1400). The value may be a value in a new value set in a shift table list that can compensate for the subframe index misalignment shift caused by SFN wraparound. The value may be a 1-bit value in DCI or a MAC CE command that indicates the SFN wraparound. This value may be transmitted with a shift value index that references the shift table list or another shift table list. The UE may apply the shift before a first ON-duration occasion of the next hyper frame. The UE may use, as a formula for a subframe, [(SFN × *numberOfSubframesPerFrame*) + subframe number in the frame] = (*timeReferenceSFN* × *numberOfSubframesPerFrame + drx-StartOffset + N* × *drx-ShortCycle*) modulo (1024 × *numberOfSubframesPerFrame*). The UE may start a *drx-onDurationTimer* for this DRX group after a *drx-SlotOffset* from the beginning of the subframe. The UE may use, as a formula for a slot, [(SFN × *numberOfSlotsPerFrame*) *+* slot number in the frame] = [*timeReferenceSFN* × *numberOfSlotsPerFrame + drx-StartOffset* × *numberOfSlotsPerSubframe + floor*(*drx-SlotOffset* / *32* × *numberOfSlotsPerSubframe*) *+ N* × *drx-ShortCycle* × *numberOfSlotsPerSubframe*] modulo (1024 × *numberOfSlotsPerFrame).* The UE may start a *drx-onDurationTimer* for this DRX group after a *drx-SlotOffset* from the beginning of the slot.

In some aspects, the MAC CE may not be transmitted due to a predictability of an SFN wraparound. In such a case, the network entity and the UE may both expect a 240 ms or a 10,240 ms relative shift whenever a hyper frame changes during a DRX cycle. As a result, the UE may apply the shift before a first ON-duration occasion of the next hyper frame without receiving a MAC CE indicating the shift. This implicit method may be triggered by a hyper frame change.

In some aspects, the UE may compensate for a timing drift between DRX on-durations and multimedia burst traffic that is associated with a misalignment between a hyper frame length and a periodicity of the multimedia data bursts. For example, the SFN wraparound problem may be resolved by compensating for the drift of 240 ms in the DRX formula. 240 subframes can be added every hyper frame in the subframe index, [(SFN × 10) + subframe number + *M ×* 240] modulo *(drx-ShortCycle)* = (*drx-StartOffset*) modulo (*drx-ShortCycle*). *M* may start from 0 when the DRX is initially configured, and *M* may increase by 1 every hyper frame with a time reference SFN or when SFN returns to 0. To resolve the timing ambiguity of a DRX configuration message, *drx-timeReferenceSFN* (0 or 512) can be further considered as the initial reference SFN value.

In some aspects, the SFN wraparound problem may be resolved by accumulating 10,240 ms in the DRX formula. For example, 10,240 subframes can be added every hyper frame in the subframe index, [(SFN × 10) + subframe number + *M* × 10240] modulo *(drx-ShortCycle)* = (*drx-StartOffset*) modulo (*drx-ShortCycle*). *M* may start from 0 when the DRX is initially configured, and *M* may increase by 1 every hyper frame with a time reference SFN or when SFN returns to 0. To resolve the timing ambiguity of a DRX configuration message, *drx-timeReferenceSFN* (0 or 512) can be further considered as the initial reference SFN value. These are examples and other formulas may add a specified amount of time (e.g., specified quantity of milliseconds) every hyper frame that satisfies a specified formula involving subframe numbers and a DRX short cycle.

As indicated above, Fig. 15 is provided as an example. Other examples may differ from what is described with regard to Fig. 15.

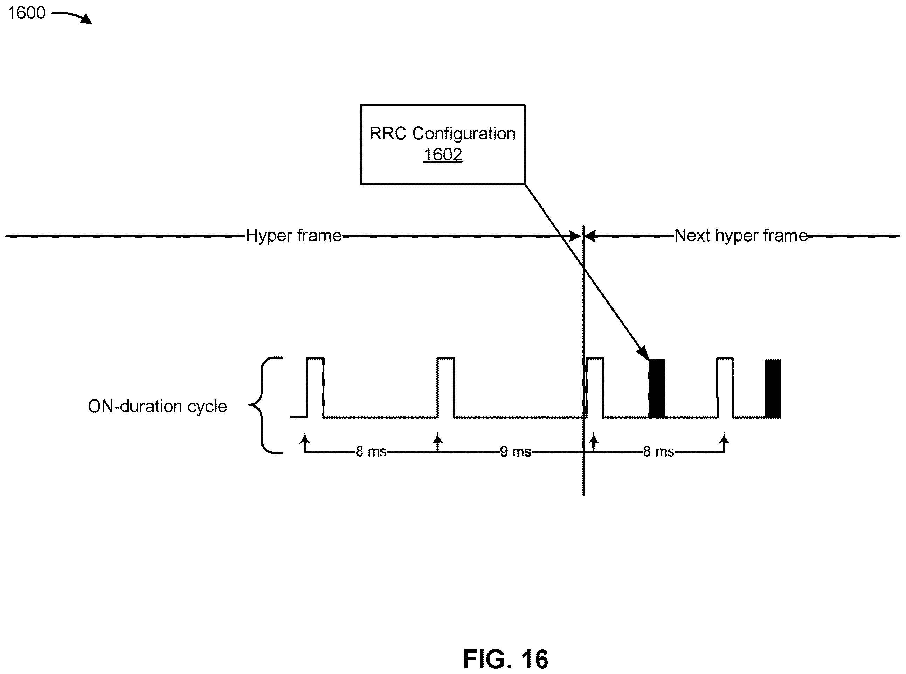

Fig. 16 is a diagram illustrating an example 1600 of an RRC configuration for DRX cycles, in accordance with the present disclosure.

A UE may receive, from a network entity during a hyper frame, an RRC configuration 1602 that indicates DRX cycle information for the hyper frame, including a new timing of ON-duration occasions. However, if the RRC configuration is received late and toward an end of the hyper frame, the DRX configuration may be applied to the next hyper frame rather than the current hyper frame. As a result, the UE and the network entity are no longer using the same DRX configuration for the hyper frame and/or for the next hyper frame.

As indicated above, Fig. 16 is provided as an example. Other examples may differ from what is described with regard to Fig. 16.

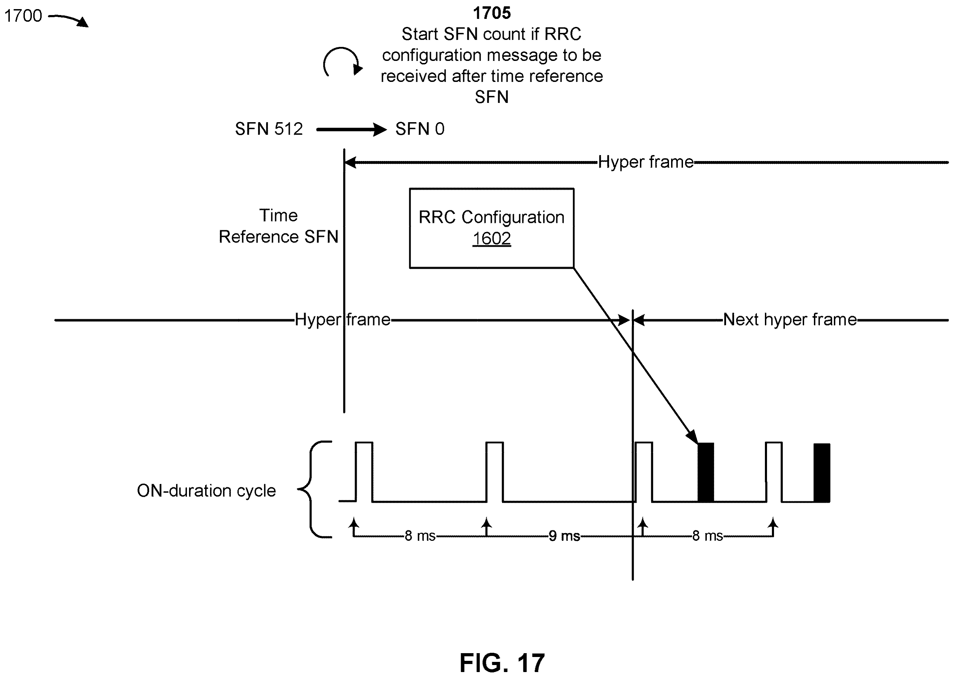

Fig. 17 is a diagram illustrating an example 1700 of starting a hyper frame for an RRC configuration for DRX cycles, in accordance with the present disclosure.

According to various aspects described herein, a network entity (e.g., base station 110) may transmit a time reference SFN value in an RRC message to indicate when a UE (e.g., UE 120) may restart a hyper frame or start a new hyper frame. For example, as shown by reference number 1705, the UE may start an SFN count (start a new hyper frame) if an RRC configuration message for DRX is received after the time reference SFN, which is SFN 512 in example 1700. As a result, the correct hyper frame is configured with the DRX configuration and there is no ambiguity between the network entity and the UE as to which DRX configuration a hyper frame is using.

As indicated above, Fig. 17 is provided as an example. Other examples may differ from what is described with regard to Fig. 17.

In some aspects, the formulas and operations described herein to address SFN wraparound may be extended to the formulas of other 5G resources including channel state information reference signals (CSI-RSs), sounding reference signals (SRSs), paging, and/or common search spaces.

In some aspects, a network entity (e.g., a base station 110) may use the formulas and operations described herein to coordinate, mirror, or match the operations described for UEs. For example, the network entity may set a hyper frame length based at least in part on a cadence of multimedia data bursts if DRX cycles are configured for the cadence of the multimedia data bursts and transmit the multimedia data bursts according to the DRX cycles. In some aspects, the network entity may, starting at a subframe (or slot), transmit a multimedia data burst based at least in part on a subframe identifier of the subframe (or a slot identifier of the slot) and a DRX cycle periodicity that corresponds to a multiple of a periodicity of multimedia data bursts. The network entity may use any of the formulas described herein. In some aspects, the network entity may shift a timing of a transmission (at a next on-duration occasion of the DRX cycle) based at least in part on the DRX cycle and a cadence of multimedia data bursts.

Fig. 18 is a diagram illustrating an example process 1800 performed, for example, by a UE, in accordance with the present disclosure. Example process 1800 is an example where the UE (e.g., UE 120) performs operations associated with a DRX methodology for multimedia traffic.

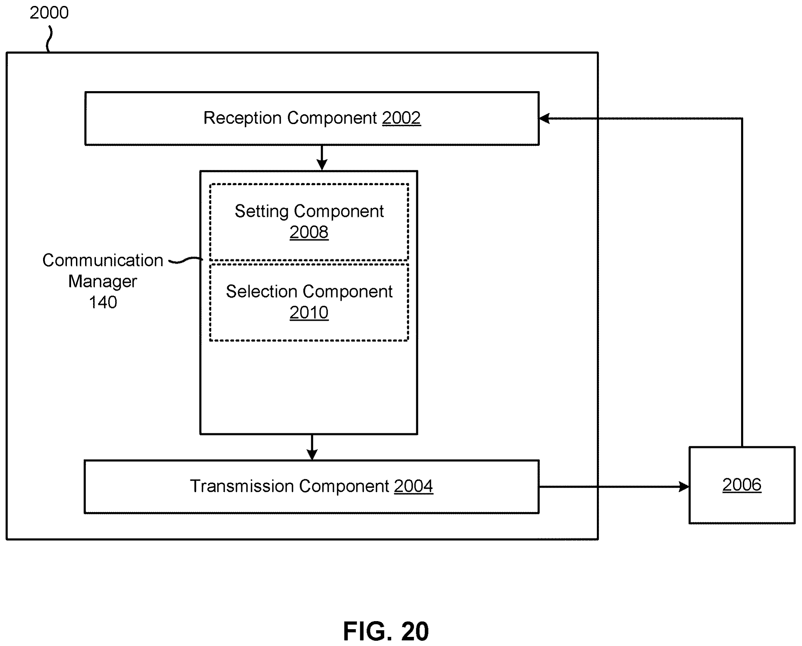

As shown in Fig. 18, in some aspects, process 1800 may include setting a hyper frame length based at least in part on a cadence of multimedia data bursts if DRX cycles are configured for the cadence of the multimedia data bursts (block 1810). For example, the UE (e.g., using communication manager 140 and/or setting component 2008 depicted in Fig. 20) may set a hyper frame length based at least in part on a cadence of multimedia data bursts if DRX cycles are configured for the cadence of the multimedia data bursts, as described above.

As further shown in Fig. 18, in some aspects, process 1800 may include receiving the multimedia data bursts according to the DRX cycle (block 1820). For example, the UE (e.g., using communication manager 140 and/or reception component 2002 depicted in Fig. 20) may receive the multimedia data bursts according to the DRX cycle, as described above.

Process 1800 may include additional aspects, such as any single aspect or any combination of aspects described below and/or in connection with one or more other processes described elsewhere herein.

In a first aspect, process 1800 includes receiving configuration information that indicates the hyper frame length.

In a second aspect, alone or in combination with the first aspect, process 1800 includes using a modulo operation with the hyper frame length to determine subframe identifiers of DRX on-duration subframes for receiving the multimedia data bursts.

In a third aspect, alone or in combination with one or more of the first and second aspects, setting the hyper frame length includes setting the hyper frame length to be less than 1024 frames.

In a fourth aspect, alone or in combination with one or more of the first through third aspects, the cadence of the multimedia data bursts corresponds to a number of hertz, and a number of frames forming the hyper frame length is a multiple of a time periodicity of the number of hertz.

In a fifth aspect, alone or in combination with one or more of the first through fourth aspects, the hyper frame length is 1000 subframes or 1000 frames.

In a sixth aspect, alone or in combination with one or more of the first through fifth aspects, process 1800 includes maintaining an SFN counter for a hyper frame and resetting the counter for a next hyper frame upon reaching the hyper frame length.

In a seventh aspect, alone or in combination with one or more of the first through sixth aspects, process 1800 includes starting an SFN counter for a hyper frame at a time reference SFN if a timing configuration for the hyper frame is expected to be received after the time reference SFN or during a next hyper frame. Process 1800 may include, receiving the timing configuration and configuring the DRX cycle based at least in part on the timing configuration. In some aspects, process 1800 includes initializing the SFN counter with a current SFN and/or a time reference SFN. In some aspects, process 1800 includes setting an SFN counter for a hyper frame with a time reference SFN if there is a timing ambiguity of hyper frame configuration caused by packet retransmission.

In an eighth aspect, alone or in combination with one or more of the first through seventh aspects, process 1800 includes receiving an indication of the time reference SFN.

In a ninth aspect, alone or in combination with one or more of the first through eighth aspects, the time reference SFN is SFN 0 or SFN 512. In some aspects, in association with an SFN wraparound issue or to address an SFN wraparound issue, process 1800 includes associating sequence numbers to DRX on-duration cycles or hyper frames and sequentially searching DRX on-duration cycles.

In a tenth aspect, alone or in combination with one or more of the first through ninth aspects, receiving the multimedia data bursts includes, for each multimedia data burst sleeping as part of the DRX cycle, and waking up, starting at a subframe, based at least in part on a subframe identifier of the subframe and a DRX short cadence value that corresponds to a number of Hz, and receiving the multimedia data burst during the subframe.

In an eleventh aspect, alone or in combination with one or more of the first through tenth aspects, the subframe identifier is equal to (a number of subframes per frame * a system frame number of a frame comprising the subframe) + a subframe number of the subframe within the frame, and the UE is to wake up during the subframe if the subframe identifier is equal to a result of a modulo operation on a value that is based at least in part on a time reference SFN within a hyper frame, the number of subframes per frame, a starting offset, a sequence number of a DRX on-duration or a hyper frame, and the DRX short cadence value or a DRX short cycle value.

In a twelfth aspect, alone or in combination with one or more of the first through eleventh aspects, receiving the multimedia data bursts includes, for each multimedia data burst, sleeping as part of the DRX cycle, and waking up, starting at a slot, based at least in part on a slot identifier of the slot and a DRX short cadence value that corresponds to a number of Hz, and receiving the multimedia data burst during the slot.

In a thirteenth aspect, alone or in combination with one or more of the first through twelfth aspects, the slot identifier is equal to (a number of slots per frame * a system frame number of a frame comprising the slot) + a slot number of the slot within the frame, and the UE is to wake up during the slot if the slot identifier is equal to a result of a modulo operation on a value that is based at least in part on a time reference SFN within a hyper frame, the number of slots per frame, a starting offset, a sequence number of a DRX on-duration or a hyper frame, and the DRX short cadence value or a DRX short cycle value.

In a fourteenth aspect, alone or in combination with one or more of the first through thirteenth aspects, process 1800 includes shifting a timing of a next on-duration occasion of the DRX cycle in a next hyper frame based at least in part on the DRX cycle being configured for the cadence of multimedia data bursts.

In a fifteenth aspect, alone or in combination with one or more of the first through fourteenth aspects, process 1800 includes shifting a timing of a next on-duration occasion of the DRX cycle in a next hyper frame based at least in part on receiving, in a MAC CE, an indication to shift the timing.

In a sixteenth aspect, alone or in combination with one or more of the first through fifteenth aspects, the indication includes a bit in the MAC CE that indicates that the hyper frame length is based at least in part on the cadence of the multimedia data bursts, and the MAC CE includes a shift value index.

In a seventeenth aspect, alone or in combination with one or more of the first through sixteenth aspects, the indication is associated with a new value set in a shift table list for a subframe index misalignment shift.

Although Fig. 18 shows example blocks of process 1800, in some aspects, process 1800 may include additional blocks, fewer blocks, different blocks, or differently arranged blocks than those depicted in Fig. 18. Additionally, or alternatively, two or more of the blocks of process 1800 may be performed in parallel.

Fig. 19 is a diagram illustrating an example process 1900 performed, for example, by a network entity, in accordance with the present disclosure. Example process 1900 is an example where the network entity (e.g., base station 110) performs operations associated with a DRX methodology for multimedia traffic.

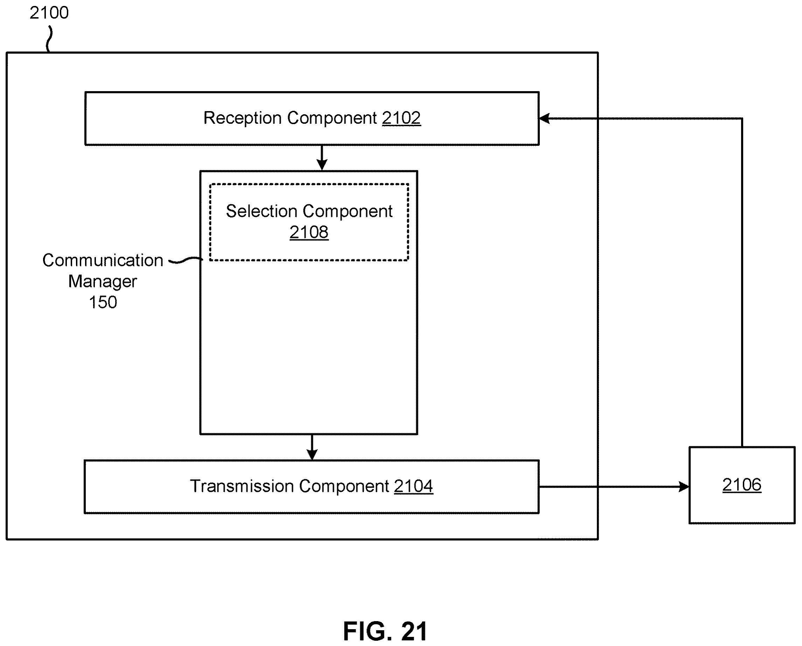

As shown in Fig. 19, in some aspects, process 1900 may include selecting a hyper frame length based at least in part on a cadence of multimedia data bursts if DRX cycles are configured for the cadence of the multimedia data bursts (block 1910). For example, the network entity (e.g., using communication manager 150 and/or selection component 2108 depicted in Fig. 21) may select a hyper frame length based at least in part on a cadence of multimedia data bursts if DRX cycles are configured for the cadence of the multimedia data bursts, as described above.

As further shown in Fig. 19, in some aspects, process 1900 may include transmitting an indication of the hyper frame length (block 1920). For example, the network entity (e.g., using communication manager 150 and/or transmission component 2104 depicted in Fig. 21) may transmit an indication of the hyper frame length, as described above.

Process 1900 may include additional aspects, such as any single aspect or any combination of aspects described below and/or in connection with one or more other processes described elsewhere herein.

In a first aspect, the hyper frame length is less than 1024 frames.

In a second aspect, alone or in combination with the first aspect, the hyper frame length is 1000 subframes or 1000 frames.

In a third aspect, alone or in combination with one or more of the first and second aspects, the cadence of the multimedia data bursts corresponds to a number of Hz, and a number of frames forming the hyper frame length is a multiple of a time periodicity of the number of Hz.

In a fourth aspect, alone or in combination with one or more of the first through third aspects, process 1900 includes transmitting, in a MAC CE, an indication to shift a timing of a next on-duration occasion of the DRX cycle in a next hyper frame.

In a fifth aspect, alone or in combination with one or more of the first through fourth aspects, the indication includes a bit in the MAC CE that indicates that the length is based at least in part on the cadence of the multimedia data bursts, and the MAC CE includes a shift value index.

In a sixth aspect, alone or in combination with one or more of the first through fifth aspects, the indication is associated with a new value set in a shift table list for a subframe index misalignment shift.

Although Fig. 19 shows example blocks of process 1900, in some aspects, process 1900 may include additional blocks, fewer blocks, different blocks, or differently arranged blocks than those depicted in Fig. 19. Additionally, or alternatively, two or more of the blocks of process 1900 may be performed in parallel.

Fig. 20 is a diagram of an example apparatus 2000 for wireless communication. The apparatus 2000 may be a UE (e.g., UE 120), or a UE may include the apparatus 2000. In some aspects, the apparatus 2000 includes a reception component 2002 and a transmission component 2004, which may be in communication with one another (for example, via one or more buses and/or one or more other components). As shown, the apparatus 2000 may communicate with another apparatus 2006 (such as a UE, a base station, a network entity, or another wireless communication device) using the reception component 2002 and the transmission component 2004. As further shown, the apparatus 2000 may include the communication manager 140. The communication manager 140 may include a setting component 2008 and/or a selection component 2010, among other examples.

In some aspects, the apparatus 2000 may be configured to perform one or more operations described herein in connection with Figs. 1-17. Additionally, or alternatively, the apparatus 2000 may be configured to perform one or more processes described herein, such as process 1800 of Fig. 18. In some aspects, the apparatus 2000 and/or one or more components shown in Fig. 20 may include one or more components of the UE described in connection with Fig. 2. Additionally, or alternatively, one or more components shown in Fig. 20 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2002 may receive communications, such as reference signals, control information, data communications, or a combination thereof, from the apparatus 2006. The reception component 2002 may provide received communications to one or more other components of the apparatus 2000. In some aspects, the reception component 2002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2000. In some aspects, the reception component 2002 may include one or more antennas, a modem, a demodulator, a MIMO detector, a receive processor, a controller/processor, a memory, or a combination thereof, of the UE described in connection with Fig. 2.

The transmission component 2004 may transmit communications, such as reference signals, control information, data communications, or a combination thereof, to the apparatus 2006. In some aspects, one or more other components of the apparatus 2000 may generate communications and may provide the generated communications to the transmission component 2004 for transmission to the apparatus 2006. In some aspects, the transmission component 2004 may perform signal processing on the generated communications (such as filtering, amplification, modulation, digital-to-analog conversion, multiplexing, interleaving, mapping, or encoding, among other examples), and may transmit the processed signals to the apparatus 2006. In some aspects, the transmission component 2004 may include one or more antennas, a modem, a modulator, a transmit MIMO processor, a transmit processor, a controller/processor, a memory, or a combination thereof, of the UE described in connection with Fig. 2. In some aspects, the transmission component 2004 may be co-located with the reception component 2002 in a transceiver.

The setting component 2008 may set a hyper frame length based at least in part on a cadence of multimedia data bursts if DRX cycles are configured for the cadence of the multimedia data bursts. The reception component 2002 may receive the multimedia data bursts according to the DRX cycles. The reception component 2002 may receive configuration information that indicates the hyper frame length.

The selection component 2010 may use a modulo operation with the hyper frame length to determine subframe identifiers for receiving the multimedia data bursts according to the DRX cycle. The selection component 2010 may maintain a system frame number counter for a hyper frame and reset the SFN counter for a next hyper frame upon reaching an end of the hyper frame.

The setting component 2008 may restart an SFN count for a hyper frame at a time reference SFN within the hyper frame if a timing configuration for the hyper frame is expected to be received after the time reference SFN or during a next hyper frame.

The reception component 2002 may receive the timing configuration. The selection component 2010 may configure the DRX cycle based at least in part on the timing configuration. The reception component 2002 may receive an indication of the time reference SFN.

The selection component 2010 may shift a timing of a next on-duration occasion of the DRX cycle in a next hyper frame based at least in part on the DRX cycle being configured for the cadence of multimedia data bursts. The selection component 2010 may shift a timing of a next on-duration occasion of the DRX cycle in a next hyper frame based at least in part on receiving, in a MAC CE, an indication to shift the timing.

The number and arrangement of components shown in Fig. 20 are provided as an example. In practice, there may be additional components, fewer components, different components, or differently arranged components than those shown in Fig. 20. Furthermore, two or more components shown in Fig. 20 may be implemented within a single component, or a single component shown in Fig. 20 may be implemented as multiple, distributed components. Additionally, or alternatively, a set of (one or more) components shown in Fig. 20 may perform one or more functions described as being performed by another set of components shown in Fig. 20.

Fig. 21 is a diagram of an example apparatus 2100 for wireless communication. The apparatus 2100 may be a network entity (e.g., base station 110), or a network entity may include the apparatus 2100. In some aspects, the apparatus 2100 includes a reception component 2102 and a transmission component 2104, which may be in communication with one another (for example, via one or more buses and/or one or more other components). As shown, the apparatus 2100 may communicate with another apparatus 2106 (such as a UE, a base station, a network entity, or another wireless communication device) using the reception component 2102 and the transmission component 2104. As further shown, the apparatus 2100 may include the communication manager 150. The communication manager 150 may include a selection component 2108, among other examples.

In some aspects, the apparatus 2100 may be configured to perform one or more operations described herein in connection with Figs. 1-17. Additionally, or alternatively, the apparatus 2100 may be configured to perform one or more processes described herein, such as process 1900 of Fig. 19. In some aspects, the apparatus 2100 and/or one or more components shown in Fig. 21 may include one or more components of the base station described in connection with Fig. 2. Additionally, or alternatively, one or more components shown in Fig. 21 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2102 may receive communications, such as reference signals, control information, data communications, or a combination thereof, from the apparatus 2106. The reception component 2102 may provide received communications to one or more other components of the apparatus 2100. In some aspects, the reception component 2102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2100. In some aspects, the reception component 2102 may include one or more antennas, a modem, a demodulator, a MIMO detector, a receive processor, a controller/processor, a memory, or a combination thereof, of the base station described in connection with Fig. 2.

The transmission component 2104 may transmit communications, such as reference signals, control information, data communications, or a combination thereof, to the apparatus 2106. In some aspects, one or more other components of the apparatus 2100 may generate communications and may provide the generated communications to the transmission component 2104 for transmission to the apparatus 2106. In some aspects, the transmission component 2104 may perform signal processing on the generated communications (such as filtering, amplification, modulation, digital-to-analog conversion, multiplexing, interleaving, mapping, or encoding, among other examples), and may transmit the processed signals to the apparatus 2106. In some aspects, the transmission component 2104 may include one or more antennas, a modem, a modulator, a transmit MIMO processor, a transmit processor, a controller/processor, a memory, or a combination thereof, of the base station described in connection with Fig. 2. In some aspects, the transmission component 2104 may be co-located with the reception component 2102 in a transceiver.

The selection component 2108 may select a hyper frame length based at least in part on a cadence of multimedia data bursts if DRX cycles are configured for the cadence of the multimedia data bursts. The transmission component 2104 may transmit an indication of the hyper frame length.

The transmission component 2104 may transmit, in a MAC CE, an indication to shift a timing of a next on-duration occasion of the DRX cycle in a next hyper frame.

The number and arrangement of components shown in Fig. 21 are provided as an example. In practice, there may be additional components, fewer components, different components, or differently arranged components than those shown in Fig. 21. Furthermore, two or more components shown in Fig. 21 may be implemented within a single component, or a single component shown in Fig. 21 may be implemented as multiple, distributed components. Additionally, or alternatively, a set of (one or more) components shown in Fig. 21 may perform one or more functions described as being performed by another set of components shown in Fig. 21.

Fig. 22 is a diagram illustrating an example process 2200 performed, for example, by a UE, in accordance with the present disclosure. Example process 2200 is an example where the UE (e.g., UE 120) performs operations associated with a DRX methodology for multimedia.

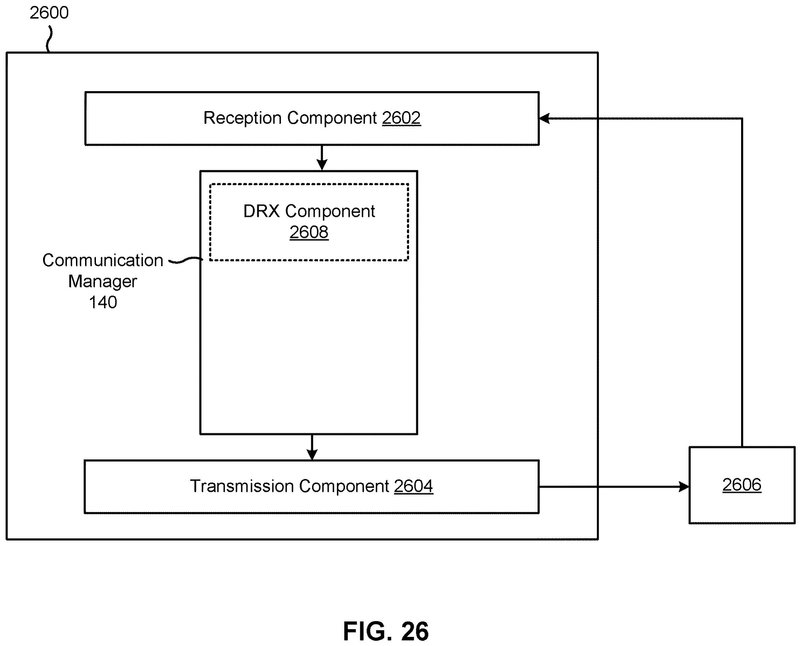

As shown in Fig. 22, in some aspects, process 2200 may include sleeping as part of a DRX cycle (block 2210). For example, the UE (e.g., using communication manager 140 and/or DRX component 2608 depicted in Fig. 26) may sleep as part of a DRX cycle, as described above.

As further shown in Fig. 22, in some aspects, process 2200 may include waking up, starting at a subframe, based at least in part on a subframe identifier of the subframe and a DRX cycle periodicity that corresponds to a multiple of a periodicity of multimedia data bursts (block 2220). For example, the UE (e.g., using communication manager 140 and/or DRX component 2608 depicted in Fig. 26) may wake up, starting at a subframe, based at least in part on a subframe identifier of the subframe and a DRX cycle periodicity that corresponds to a multiple of a periodicity of multimedia data bursts, as described above.

As further shown in Fig. 22, in some aspects, process 2200 may include receiving a multimedia data burst during the subframe (block 2230). For example, the UE (e.g., using communication manager 140 and/or reception component 2602 depicted in Fig. 26) may receive a multimedia data burst during the subframe, as described above.

Process 2200 may include additional aspects, such as any single aspect or any combination of aspects described below and/or in connection with one or more other processes described elsewhere herein.

In a first aspect, the subframe identifier is equal to (a number of subframes per frame * an SFN of a frame comprising the subframe) + a subframe number of the subframe within the frame, and wherein the UE is to wake up during the subframe if the subframe identifier is equal to a result of a modulo operation on a value that is based at least in part on a time reference SFN within a hyper frame, the number of subframes per frame, a starting offset, and a DRX short cadence value or a DRX short cycle value.

In a second aspect, alone or in combination with the first aspect, the subframe identifier is equal to (a number of subframes per frame * an SFN of a frame comprising the subframe) + a subframe number of the subframe within the frame, and wherein the UE is to wake up during the subframe if the subframe identifier is equal to (a time reference SFN * the number of subframes per frame + a starting offset + a floor value of (a sequential number * 1000 / a DRX short cadence value) modulo (1024 * the number of subframes per frame)).

In a third aspect, alone or in combination with one or more of the first and second aspects, the subframe identifier is equal to (a number of subframes per frame * an SFN of a frame comprising the subframe) + a subframe number of the subframe within the frame, and wherein the UE is to wake up during the subframe if the subframe identifier is equal to (a time reference SFN * the number of subframes per frame + a starting offset + (a sequential number * a DRX short cycle value)) modulo (1024 * the number of subframes per frame).

In a fourth aspect, alone or in combination with one or more of the first through third aspects, the subframe identifier is equal to (a number of subframes per frame * an SFN of a frame comprising the subframe) + a subframe number of the subframe within the frame, and wherein the UE is to wake up during the subframe if the subframe identifier is equal to (a time reference SFN * the number of subframes per frame + a starting offset + a floor or ceiling of (a sequential number * a DRX short cycle value)) modulo (1024 * the number of subframes per frame).

In a fifth aspect, alone or in combination with one or more of the first through fourth aspects, the DRX short cycle value is one of a set of rational numbers that are associated with a periodicity of the DRX cycle.

In a sixth aspect, alone or in combination with one or more of the first through fifth aspects, the time reference SFN is associated with a time offset.

In a seventh aspect, alone or in combination with one or more of the first through sixth aspects, the starting offset is one of multiple starting offsets that are configured for the DRX short cycle value or a DRX short cadence value.

In an eighth aspect, alone or in combination with one or more of the first through seventh aspects, the value is further based at least in part on one of multiple slot offsets that are configured for the DRX short cycle value or a DRX short cadence value.

Although Fig. 22 shows example blocks of process 2200, in some aspects, process 2200 may include additional blocks, fewer blocks, different blocks, or differently arranged blocks than those depicted in Fig. 22. Additionally, or alternatively, two or more of the blocks of process 2200 may be performed in parallel.

Fig. 23 is a diagram illustrating an example process 2300 performed, for example, by a UE, in accordance with the present disclosure. Example process 2300 is an example where the UE (e.g., UE 120) performs operations associated with a DRX methodology for multimedia.

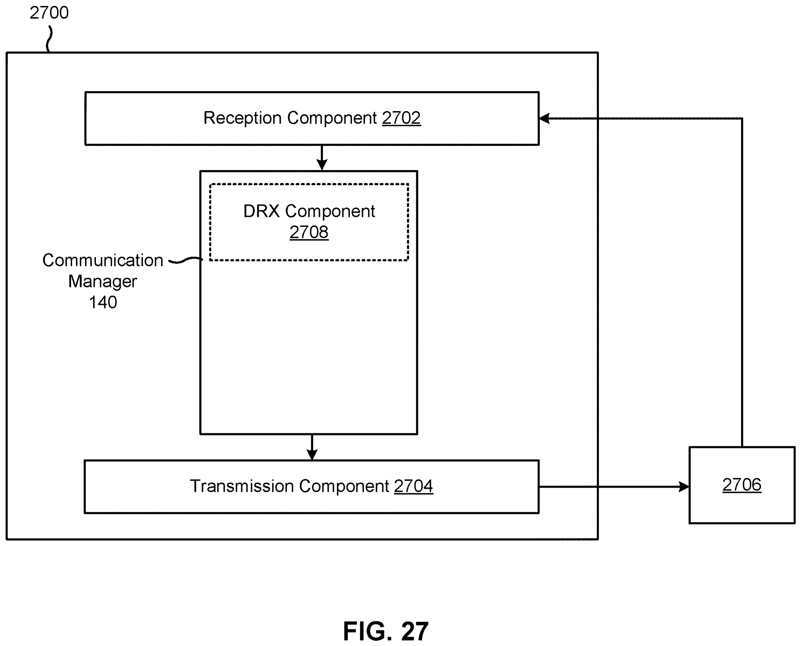

As shown in Fig. 23, in some aspects, process 2300 may include sleeping as part of a DRX cycle (block 2310). For example, the UE (e.g., using communication manager 140 and/or DRX component 2708 depicted in Fig. 27) may sleep as part of a DRX cycle, as described above.

As further shown in Fig. 23, in some aspects, process 2300 may include waking up, starting at a slot, based at least in part on a slot identifier of the slot and a DRX cycle periodicity that corresponds to a multiple of a periodicity of multimedia data bursts (block 2320). For example, the UE (e.g., using communication manager 140 and/or DRX component 2708 depicted in Fig. 27) may wake up, starting at a slot, based at least in part on a slot identifier of the slot and a DRX cycle periodicity that corresponds to a multiple of a periodicity of multimedia data bursts, as described above.

As further shown in Fig. 23, in some aspects, process 2300 may include receiving a multimedia data burst during the slot (block 2330). For example, the UE (e.g., using communication manager 140 and/or reception component 2702 depicted in Fig. 27) may receive a multimedia data burst during the slot, as described above.

Process 2300 may include additional aspects, such as any single aspect or any combination of aspects described below and/or in connection with one or more other processes described elsewhere herein.

In a first aspect, the slot identifier is equal to (a number of slots per frame * an SFN of a frame comprising the slot) + a slot number of the slot within the frame, and wherein the UE is to wake up during the slot if the slot identifier is equal to a result of a modulo operation on a value that is based at least in part on a time reference SFN within a hyper frame, the number of slots per frame, a starting offset, and a DRX short cadence value or a DRX short cycle value. The DRX short cadence value may have a relationship with a "DRX short cycle" or "DRX short cycle value".

In a second aspect, alone or in combination with the first aspect, the slot identifier is equal to (a number of slots per frame * an SFN of a frame comprising the slot) + a slot number of the slot within the frame, and wherein the UE is to wake up during the slot if the slot identifier is equal to (a time reference SFN * the number of slots per frame + (a starting offset * the number of slots per frame) + a slot offset + a floor value of (a sequential number * the number of slots per subframe * 1000 / a DRX short cadence value) modulo (1024 * the number of slots per frame)).

In a third aspect, alone or in combination with one or more of the first and second aspects, the slot identifier is equal to (a number of slots per frame * an SFN of a frame comprising the slot) + a slot number of the slot within the frame, and wherein the UE is to wake up during the slot if the slot identifier is equal to (a time reference SFN * the number of slots per frame + (a starting offset * the number of slots per frame) + a slot offset + (a sequential number * a DRX short cycle value)) modulo (1024 * the number of slots per frame). The starting offset may be defined in subframes, and the DRX short cycle may be defined in slots.

In a fourth aspect, alone or in combination with one or more of the first through third aspects, the slot identifier is equal to (a number of slots per frame * a system frame number (SFN) of a frame comprising the slot) + a slot number of the slot within the frame, and wherein the UE is to wake up during the slot if the slot identifier is equal to (a time reference SFN * the number of slots per frame + a starting offset + (a sequential number * a DRX short cycle value)) modulo (1024 * the number of slots per frame). The starting offset and the DRX short cycle may be defined in slots.

In a fifth aspect, alone or in combination with one or more of the first through fourth aspects, the time reference SFN is associated with a time offset.

In a sixth aspect, alone or in combination with one or more of the first through fifth aspects, the starting offset is one of multiple starting offsets that are configured for the DRX short cycle value or a DRX short cadence value.

In a sixth aspect, alone or in combination with one or more of the first through fifth aspects, the value is further based at least in part on one of multiple slot offsets that are configured for the DRX short cycle value or a DRX short cadence value.

Although Fig. 23 shows example blocks of process 2300, in some aspects, process 2300 may include additional blocks, fewer blocks, different blocks, or differently arranged blocks than those depicted in Fig. 23. Additionally, or alternatively, two or more of the blocks of process 2300 may be performed in parallel.

Fig. 24 is a diagram illustrating an example process 2400 performed, for example, by a UE, in accordance with the present disclosure. Example process 2400 is an example where the UE (e.g., UE 120) performs operations associated with a DRX methodology for multimedia.

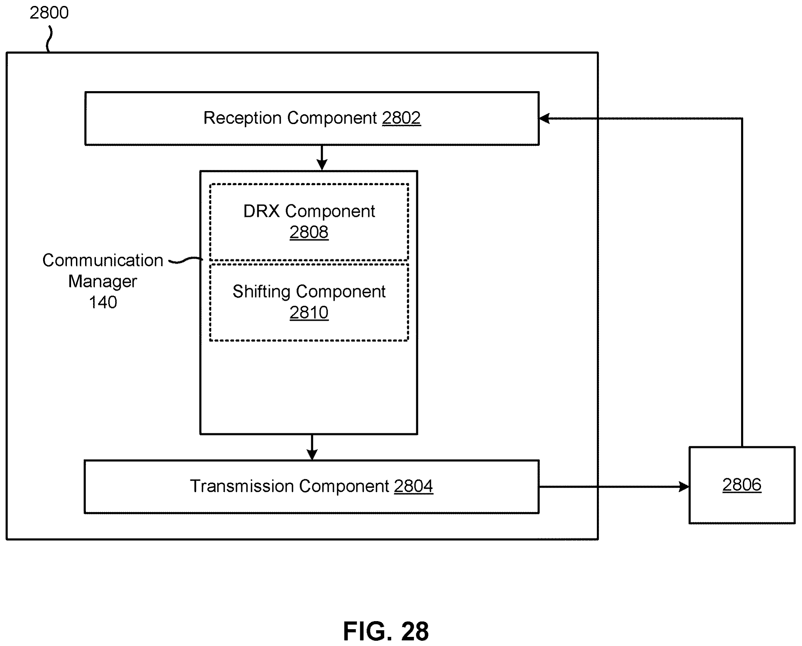

As shown in Fig. 24, in some aspects, process 2400 may include waking up during an on-duration occasion of a DRX cycle to receive a multimedia data burst (block 2410). For example, the UE (e.g., using communication manager 140 and/or DRX component 2808 depicted in Fig. 28) may wake up during an on-duration occasion of a DRX cycle to receive a multimedia data burst, as described above.

As further shown in Fig. 24, in some aspects, process 2400 may include shifting a timing of a next on-duration occasion of the DRX cycle based at least in part on the DRX cycle and a cadence of multimedia data bursts (block 2420). For example, the UE (e.g., using communication manager 140 and/or shifting component 2810 depicted in Fig. 28) may shift a timing of a next on-duration occasion of the DRX cycle based at least in part on the DRX cycle and a cadence of multimedia data bursts, as described above.

Process 2400 may include additional aspects, such as any single aspect or any combination of aspects described below and/or in connection with one or more other processes described elsewhere herein.

In a first aspect, the shifting the timing includes shifting the timing of the next on-duration occasion of the DRX cycle based at least in part on receiving, in MAC CE, an indication to shift the timing. The indication may include a bit in the MAC CE that indicates that a DRX shift is to compensate for a subframe index misalignment shift, and the MAC CE may include a shift value index.

In a second aspect, alone or in combination with the first aspect, the indication includes a bit in the MAC CE that indicates that a DRX shift is to compensate for a subframe index misalignment shift, and the MAC CE includes a shift value index.

In a third aspect, alone or in combination with one or more of the first and second aspects, the indication is associated with a new value set in a shift table list for a subframe index misalignment shift.

In a fourth aspect, alone or in combination with one or more of the first through third aspects, the shifting the timing includes shifting the timing of the next on-duration occasion of the DRX cycle based at least in part on a hyper frame change.

In a fifth aspect, alone or in combination with one or more of the first through fourth aspects, process 2400 includes compensating for a 240 millisecond drift every hyper frame using a DRX formula that is specified as [(an SFN of a frame × 10) + a subframe number + M × 240] modulo (DRX short cycle) = DRX start offset modulo DRX short cycle, and wherein M increases by 1 every hyper frame with a time reference SFN or when SFN returns to 0.

In a sixth aspect, alone or in combination with one or more of the first through fifth aspects, process 2400 includes adding 10240 milliseconds every hyper frame in a DRX formula that is specified as [(an SFN of a frame × 10) + a subframe number + M × 10240] modulo (DRX short cycle) = DRX start offset modulo DRX short cycle, and wherein M increases by 1 every hyper frame with a time reference SFN or when SFN returns to 0.

In some aspects, process 2400 may include waking up during an on-duration occasion of a DRX cycle to receive a multimedia data burst. For example, the UE (e.g., using communication manager 140 and/or DRX component 2808 depicted in Fig. 28) may wake up during an on-duration occasion of a DRX cycle to receive a multimedia data burst, as described above.

In some aspects, process 2400 may include compensating for a timing drift between DRX on-durations and multimedia burst traffic that is associated with a misalignment between a hyper frame length and a periodicity of the multimedia data bursts. For example, the UE (e.g., using communication manager 140 and/or shifting component 2810 depicted in Fig. 28) may compensate for a timing drift between DRX on-durations and multimedia burst traffic that is associated with a misalignment between a hyper frame length and a periodicity of the multimedia data bursts, as described above.

Although Fig. 24 shows example blocks of process 2400, in some aspects, process 2400 may include additional blocks, fewer blocks, different blocks, or differently arranged blocks than those depicted in Fig. 24. Additionally, or alternatively, two or more of the blocks of process 2400 may be performed in parallel.

Fig. 25 is a diagram illustrating an example process 2500 performed, for example, by a network entity, in accordance with the present disclosure. Example process 2500 is an example where the network entity (e.g., base station 110) performs operations associated with a DRX methodology for multimedia.

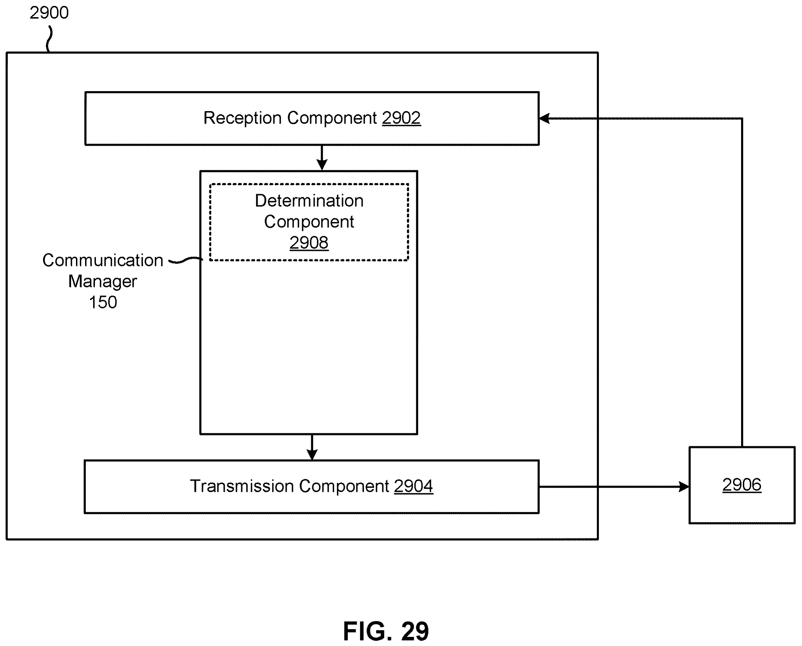

As shown in Fig. 25, in some aspects, process 2500 may include determining that a subframe index misalignment shift is to occur in a DRX cycle for a UE (block 2510). For example, the network entity (e.g., using communication manager 150 and/or determination component 2908 depicted in Fig. 29) may determine that a subframe index misalignment shift is to occur in a DRX cycle for a UE, as described above.

As further shown in Fig. 25, in some aspects, process 2500 may include transmitting, to the UE in a MAC CE, an indication to shift a timing of a next on-duration occasion of the DRX cycle (block 2520). For example, the network entity (e.g., using communication manager 150 and/or transmission component 2904 depicted in Fig. 29) may transmit, to the UE in a MAC CE, an indication to shift a timing of a next on-duration occasion of the DRX cycle, as described above.

Process 2500 may include additional aspects, such as any single aspect or any combination of aspects described below and/or in connection with one or more other processes described elsewhere herein.

In a first aspect, the indication includes a bit in the MAC CE that indicates that a DRX shift is to compensate for a subframe index misalignment shift, and the MAC CE includes a shift value index.

In a second aspect, alone or in combination with the first aspect, the indication is associated with a new value set in a shift table list for a subframe index misalignment shift.

Although Fig. 25 shows example blocks of process 2500, in some aspects, process 2500 may include additional blocks, fewer blocks, different blocks, or differently arranged blocks than those depicted in Fig. 25. Additionally, or alternatively, two or more of the blocks of process 2500 may be performed in parallel.

Fig. 26 is a diagram of an example apparatus 2600 for wireless communication. The apparatus 2600 may be a UE (e.g., UE 120), or a UE may include the apparatus 2600. In some aspects, the apparatus 2600 includes a reception component 2602 and a transmission component 2604, which may be in communication with one another (for example, via one or more buses and/or one or more other components). As shown, the apparatus 2600 may communicate with another apparatus 2606 (such as a UE, a base station, a network entity, or another wireless communication device) using the reception component 2602 and the transmission component 2604. As further shown, the apparatus 2600 may include the communication manager 140. The communication manager 140 may include a DRX component 2608, among other examples.

In some aspects, the apparatus 2600 may be configured to perform one or more operations described herein in connection with Figs. 1-17. Additionally, or alternatively, the apparatus 2600 may be configured to perform one or more processes described herein, such as process 2200 of Fig. 22. In some aspects, the apparatus 2600 and/or one or more components shown in Fig. 26 may include one or more components of the UE described in connection with Fig. 2. Additionally, or alternatively, one or more components shown in Fig. 26 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2602 may receive communications, such as reference signals, control information, data communications, or a combination thereof, from the apparatus 2606. The reception component 2602 may provide received communications to one or more other components of the apparatus 2600. In some aspects, the reception component 2602 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2600. In some aspects, the reception component 2602 may include one or more antennas, a modem, a demodulator, a MIMO detector, a receive processor, a controller/processor, a memory, or a combination thereof, of the UE described in connection with Fig. 2.

The transmission component 2604 may transmit communications, such as reference signals, control information, data communications, or a combination thereof, to the apparatus 2606. In some aspects, one or more other components of the apparatus 2600 may generate communications and may provide the generated communications to the transmission component 2604 for transmission to the apparatus 2606. In some aspects, the transmission component 2604 may perform signal processing on the generated communications (such as filtering, amplification, modulation, digital-to-analog conversion, multiplexing, interleaving, mapping, or encoding, among other examples), and may transmit the processed signals to the apparatus 2606. In some aspects, the transmission component 2604 may include one or more antennas, a modem, a modulator, a transmit MIMO processor, a transmit processor, a controller/processor, a memory, or a combination thereof, of the UE described in connection with Fig. 2. In some aspects, the transmission component 2604 may be co-located with the reception component 2602 in a transceiver.

The DRX component 2608 may sleep as part of a DRX cycle. The DRX component 2608 may wake up, starting at a subframe, based at least in part on a subframe identifier of the subframe and a DRX cycle periodicity that corresponds to a multiple of a periodicity of multimedia data bursts. The reception component 2602 may receive a multimedia data burst during the subframe.

The number and arrangement of components shown in Fig. 26 are provided as an example. In practice, there may be additional components, fewer components, different components, or differently arranged components than those shown in Fig. 26. Furthermore, two or more components shown in Fig. 26 may be implemented within a single component, or a single component shown in Fig. 26 may be implemented as multiple, distributed components. Additionally, or alternatively, a set of (one or more) components shown in Fig. 26 may perform one or more functions described as being performed by another set of components shown in Fig. 26.

Fig. 27 is a diagram of an example apparatus 2700 for wireless communication. The apparatus 2700 may be a UE (e.g., UE 120), or a UE may include the apparatus 2700. In some aspects, the apparatus 2700 includes a reception component 2702 and a transmission component 2704, which may be in communication with one another (for example, via one or more buses and/or one or more other components). As shown, the apparatus 2700 may communicate with another apparatus 2706 (such as a UE, a base station, a network entity, or another wireless communication device) using the reception component 2702 and the transmission component 2704. As further shown, the apparatus 2700 may include the communication manager 140. The communication manager 140 may include a DRX component 2708, among other examples.

In some aspects, the apparatus 2700 may be configured to perform one or more operations described herein in connection with Figs. 1-17. Additionally, or alternatively, the apparatus 2700 may be configured to perform one or more processes described herein, such as process 2300 of Fig. 23. In some aspects, the apparatus 2700 and/or one or more components shown in Fig. 27 may include one or more components of the UE described in connection with Fig. 2. Additionally, or alternatively, one or more components shown in Fig. 27 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2702 may receive communications, such as reference signals, control information, data communications, or a combination thereof, from the apparatus 2706. The reception component 2702 may provide received communications to one or more other components of the apparatus 2700. In some aspects, the reception component 2702 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2700. In some aspects, the reception component 2702 may include one or more antennas, a modem, a demodulator, a MIMO detector, a receive processor, a controller/processor, a memory, or a combination thereof, of the UE described in connection with Fig. 2.

The transmission component 2704 may transmit communications, such as reference signals, control information, data communications, or a combination thereof, to the apparatus 2706. In some aspects, one or more other components of the apparatus 2700 may generate communications and may provide the generated communications to the transmission component 2704 for transmission to the apparatus 2706. In some aspects, the transmission component 2704 may perform signal processing on the generated communications (such as filtering, amplification, modulation, digital-to-analog conversion, multiplexing, interleaving, mapping, or encoding, among other examples), and may transmit the processed signals to the apparatus 2706. In some aspects, the transmission component 2704 may include one or more antennas, a modem, a modulator, a transmit MIMO processor, a transmit processor, a controller/processor, a memory, or a combination thereof, of the UE described in connection with Fig. 2. In some aspects, the transmission component 2704 may be co-located with the reception component 2702 in a transceiver.

The DRX component 2708 may sleep as part of a DRX cycle. The DRX component 2708 may wake up, starting at a slot, based at least in part on a slot identifier of the slot and a DRX cycle periodicity that corresponds to a multiple of a periodicity of multimedia data bursts. The reception component 2702 may receive a multimedia data burst during the slot.

The number and arrangement of components shown in Fig. 27 are provided as an example. In practice, there may be additional components, fewer components, different components, or differently arranged components than those shown in Fig. 27. Furthermore, two or more components shown in Fig. 27 may be implemented within a single component, or a single component shown in Fig. 27 may be implemented as multiple, distributed components. Additionally, or alternatively, a set of (one or more) components shown in Fig. 27 may perform one or more functions described as being performed by another set of components shown in Fig. 27.

Fig. 28 is a diagram of an example apparatus 2800 for wireless communication. The apparatus 2800 may be a UE (e.g., UE 120), or a UE may include the apparatus 2800. In some aspects, the apparatus 2800 includes a reception component 2802 and a transmission component 2804, which may be in communication with one another (for example, via one or more buses and/or one or more other components). As shown, the apparatus 2800 may communicate with another apparatus 2806 (such as a UE, a base station, a network entity, or another wireless communication device) using the reception component 2802 and the transmission component 2804. As further shown, the apparatus 2800 may include the communication manager 140. The communication manager 140 may include a DRX component 2808 and/or a shifting component 2810, among other examples.

In some aspects, the apparatus 2800 may be configured to perform one or more operations described herein in connection with Figs. 1-17. Additionally, or alternatively, the apparatus 2800 may be configured to perform one or more processes described herein, such as process 2400 of Fig. 24. In some aspects, the apparatus 2800 and/or one or more components shown in Fig. 28 may include one or more components of the UE described in connection with Fig. 2. Additionally, or alternatively, one or more components shown in Fig. 28 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2802 may receive communications, such as reference signals, control information, data communications, or a combination thereof, from the apparatus 2806. The reception component 2802 may provide received communications to one or more other components of the apparatus 2800. In some aspects, the reception component 2802 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2800. In some aspects, the reception component 2802 may include one or more antennas, a modem, a demodulator, a MIMO detector, a receive processor, a controller/processor, a memory, or a combination thereof, of the UE described in connection with Fig. 2.

The transmission component 2804 may transmit communications, such as reference signals, control information, data communications, or a combination thereof, to the apparatus 2806. In some aspects, one or more other components of the apparatus 2800 may generate communications and may provide the generated communications to the transmission component 2804 for transmission to the apparatus 2806. In some aspects, the transmission component 2804 may perform signal processing on the generated communications (such as filtering, amplification, modulation, digital-to-analog conversion, multiplexing, interleaving, mapping, or encoding, among other examples), and may transmit the processed signals to the apparatus 2806. In some aspects, the transmission component 2804 may include one or more antennas, a modem, a modulator, a transmit MIMO processor, a transmit processor, a controller/processor, a memory, or a combination thereof, of the UE described in connection with Fig. 2. In some aspects, the transmission component 2804 may be co-located with the reception component 2802 in a transceiver.

The DRX component 2808 may wake up during an on-duration occasion of a DRX cycle to receive a multimedia data burst. The shifting component 2810 may shift a timing of a next on-duration occasion of the DRX cycle based at least in part on the DRX cycle and a cadence of multimedia data bursts. In some aspects, the shifting component 2810 may compensate for a timing drift between DRX on-durations and multimedia burst traffic that is associated with a misalignment between a hyper frame length and a periodicity of the multimedia data bursts. This may include adding a specified quantity of milliseconds every hyper frame that satisfies a formula that includes subframe number and a DRX short cycle.

The number and arrangement of components shown in Fig. 28 are provided as an example. In practice, there may be additional components, fewer components, different components, or differently arranged components than those shown in Fig. 28. Furthermore, two or more components shown in Fig. 28 may be implemented within a single component, or a single component shown in Fig. 28 may be implemented as multiple, distributed components. Additionally, or alternatively, a set of (one or more) components shown in Fig. 28 may perform one or more functions described as being performed by another set of components shown in Fig. 28.

Fig. 29 is a diagram of an example apparatus 2900 for wireless communication. The apparatus 2900 may be a network entity (e.g., base station 110), or a network entity may include the apparatus 2900. In some aspects, the apparatus 2900 includes a reception component 2902 and a transmission component 2904, which may be in communication with one another (for example, via one or more buses and/or one or more other components). As shown, the apparatus 2900 may communicate with another apparatus 2906 (such as a UE, a base station, a network entity, or another wireless communication device) using the reception component 2902 and the transmission component 2904. As further shown, the apparatus 2900 may include the communication manager 150. The communication manager 150 may include a determination component 2908, among other examples.

In some aspects, the apparatus 2900 may be configured to perform one or more operations described herein in connection with Figs. 1-17. Additionally, or alternatively, the apparatus 2900 may be configured to perform one or more processes described herein, such as process 2500 of Fig. 25. In some aspects, the apparatus 2900 and/or one or more components shown in Fig. 29 may include one or more components of the base station described in connection with Fig. 2. Additionally, or alternatively, one or more components shown in Fig. 29 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2902 may receive communications, such as reference signals, control information, data communications, or a combination thereof, from the apparatus 2906. The reception component 2902 may provide received communications to one or more other components of the apparatus 2900. In some aspects, the reception component 2902 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2900. In some aspects, the reception component 2902 may include one or more antennas, a modem, a demodulator, a MIMO detector, a receive processor, a controller/processor, a memory, or a combination thereof, of the base station described in connection with Fig. 2.

The transmission component 2904 may transmit communications, such as reference signals, control information, data communications, or a combination thereof, to the apparatus 2906. In some aspects, one or more other components of the apparatus 2900 may generate communications and may provide the generated communications to the transmission component 2904 for transmission to the apparatus 2906. In some aspects, the transmission component 2904 may perform signal processing on the generated communications (such as filtering, amplification, modulation, digital-to-analog conversion, multiplexing, interleaving, mapping, or encoding, among other examples), and may transmit the processed signals to the apparatus 2906. In some aspects, the transmission component 2904 may include one or more antennas, a modem, a modulator, a transmit MIMO processor, a transmit processor, a controller/processor, a memory, or a combination thereof, of the base station described in connection with Fig. 2. In some aspects, the transmission component 2904 may be co-located with the reception component 2902 in a transceiver.

The determination component 2908 may determine that a subframe index misalignment shift is to occur in a DRX cycle for a UE. The transmission component 2904 may transmit, to the UE in a MAC CE, an indication to shift a timing of a next on-duration occasion of the DRX cycle.

The number and arrangement of components shown in Fig. 29 are provided as an example. In practice, there may be additional components, fewer components, different components, or differently arranged components than those shown in Fig. 29. Furthermore, two or more components shown in Fig. 29 may be implemented within a single component, or a single component shown in Fig. 29 may be implemented as multiple, distributed components. Additionally, or alternatively, a set of (one or more) components shown in Fig. 29 may perform one or more functions described as being performed by another set of components shown in Fig. 29.

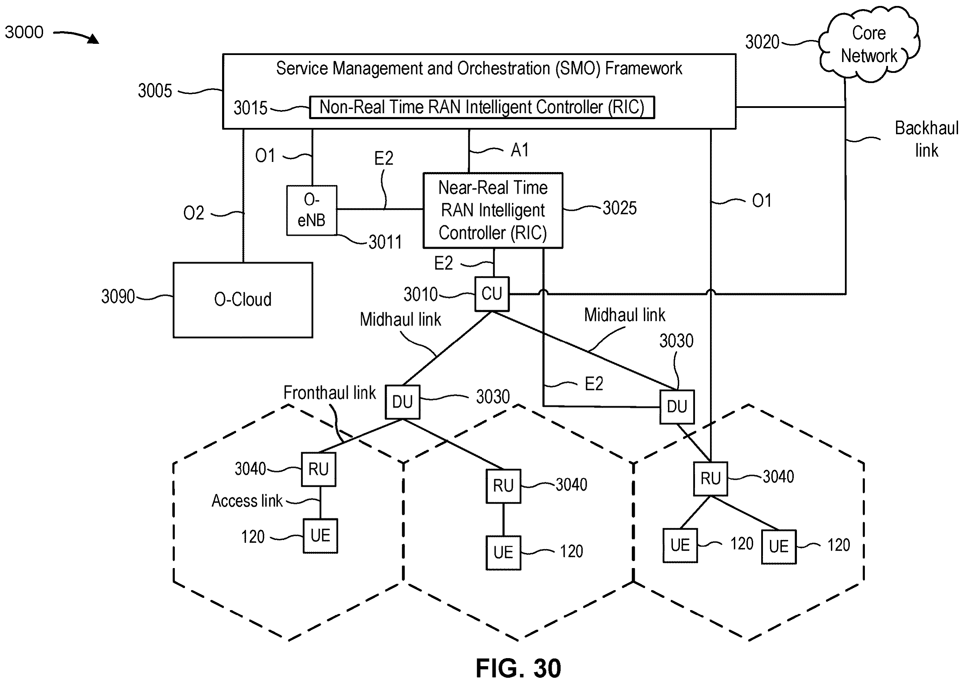

Fig. 30 is a diagram illustrating an example of a disaggregated base station 3000, in accordance with the present disclosure.

Deployment of communication systems, such as 5G NR systems, may be arranged in multiple manners with various components or constituent parts. In a 5G NR system, or network, a network node, a network entity, a mobility element of a network, a radio access network (RAN) node, a core network node, a network element, or a network equipment, such as a base station, or one or more units (or one or more components) performing base station functionality, may be implemented in an aggregated or disaggregated architecture. For example, a BS (such as a Node B, evolved NB (eNB), NR BS, 5G NB, access point (AP), a TRP, or a cell, etc.) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more CUs, one or more DUs, or one or more RUs). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU, and RU also can be implemented as virtual units (e.g., a virtual central unit (VCU), a virtual distributed unit (VDU), or a virtual radio unit (VRU)).

Base station-type operation or network design may consider aggregation characteristics of base station functionality. For example, disaggregated base stations may be utilized in an IAB network, an open radio access network (O-RAN (such as the network configuration sponsored by the O-RAN Alliance)), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

The disaggregated base station 3000 architecture may include one or more CUs 3010 that can communicate directly with a core network 3020 via a backhaul link, or indirectly with the core network 3020 through one or more disaggregated base station units (such as a Near-RT RIC 3025 via an E2 link, or a Non-RT RIC 3015 associated with a Service Management and Orchestration (SMO) Framework 3005, or both). A CU 3010 may communicate with one or more DUs 3030 via respective midhaul links, such as an F1 interface. The DUs 3030 may communicate with one or more RUs 3040 via respective fronthaul links. The fronthaul link, the midhaul link, and the backhaul link may be generally referred to as "communication links." The RUs 3040 may communicate with respective UEs 120 via one or more RF access links. In some aspects, the UE 120 may be simultaneously served by multiple RUs 3040. The DUs 3030 and the RUs 3040 may also be referred to as "O-RAN DUs (O-DUs") and "O-RAN RUs (O-RUs)", respectively. A network entity may include a CU, a DU, an RU, or any combination of CUs, DUs, and RUs. A network entity may include a disaggregated base station or one or more components of the disaggregated base station, such as a CU, a DU, an RU, or any combination of CUs, DUs, and RUs. A network entity may also include one or more of a TRP, a relay station, a passive device, an intelligent reflective surface (IRS), or other components that may provide a network interface for or serve a UE, mobile station, sensor/actuator, or other wireless device.

Each of the units (e.g., the CUs 3010, the DUs 3030, the RUs 3040, as well as the Near-RT RICs 3025, the Non-RT RICs 3015 and the SMO Framework 3005) may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as an RF transceiver), configured to receive or transmit signals, or both, over a wireless transmission medium to one or more of the other units.

In some aspects, the CU 3010 may host one or more higher layer control functions. Such control functions can include RRC, packet data convergence protocol (PDCP), service data adaptation protocol (SDAP), or the like. Each control function can be implemented with an interface configured to communicate signals with other control functions hosted by the CU 3010. The CU 3010 may be configured to handle user plane functionality (i.e., Central Unit - User Plane (CU-UP)), control plane functionality (i.e., Central Unit - Control Plane (CU-CP)), or a combination thereof. In some implementations, the CU 3010 can be logically split into one or more CU-UP units and one or more CU-CP units. The CU-UP unit can communicate bidirectionally with the CU-CP unit via an interface, such as the E1 interface when implemented in an O-RAN configuration. The CU 3010 can be implemented to communicate with the DU 3030, as necessary, for network control and signaling.

The DU 3030 may correspond to a logical unit that includes one or more base station functions to control the operation of one or more RUs 3040. In some aspects, the DU 3030 may host one or more of a radio link control (RLC) layer, a MAC layer, and one or more high physical (PHY) layers (such as modules for forward error correction (FEC) encoding and decoding, scrambling, modulation and demodulation, or the like) depending, at least in part, on a functional split, such as those defined by the 3GPP. In some aspects, the DU 3030 may further host one or more low PHY layers. Each layer (or module) can be implemented with an interface configured to communicate signals with other layers (and modules) hosted by the DU 3030, or with the control functions hosted by the CU 3010.

Lower-layer functionality can be implemented by one or more RUs 3040. In some deployments, an RU 3040, controlled by a DU 3030, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 3040 can be implemented to handle over the air (OTA) communication with one or more UEs 120. In some implementations, real-time and non-real-time aspects of control and user plane communication with the RU(s) 3040 can be controlled by the corresponding DU 3030. In some scenarios, this configuration can enable the DU(s) 3030 and the CU 3010 to be implemented in a cloud-based RAN architecture, such as a vRAN architecture.

The SMO Framework 3005 may be configured to support RAN deployment and provisioning of non-virtualized and virtualized network elements. For non-virtualized network elements, the SMO Framework 3005 may be configured to support the deployment of dedicated physical resources for RAN coverage requirements which may be managed via an operations and maintenance interface (such as an O1 interface). For virtualized network elements, the SMO Framework 3005 may be configured to interact with a cloud computing platform (such as an open cloud (O-Cloud) 3090) to perform network element life cycle management (such as to instantiate virtualized network elements) via a cloud computing platform interface (such as an O2 interface). Such virtualized network elements can include, but are not limited to, CUs 3010, DUs 3030, RUs 3040 and Near-RT RICs 3025. In some implementations, the SMO Framework 3005 can communicate with a hardware aspect of a 4G RAN, such as an open eNB (O-eNB) 3011, via an O1 interface. Additionally, in some implementations, the SMO Framework 3005 can communicate directly with one or more RUs 3040 via an O1 interface. The SMO Framework 3005 also may include a Non-RT RIC 3015 configured to support functionality of the SMO Framework 3005.

The Non-RT RIC 3015 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 3025. The Non-RT RIC 3015 may be coupled to or communicate with (such as via an A1 interface) the Near-RT RIC 3025. The Near-RT RIC 3025 may be configured to include a logical function that enables near-real-time control and optimization of RAN elements and resources via data collection and actions over an interface (such as via an E2 interface) connecting one or more CUs 3010, one or more DUs 3030, or both, as well as an O-eNB, with the Near-RT RIC 3025.

In some implementations, to generate AI/ML models to be deployed in the Near-RT RIC 3025, the Non-RT RIC 3015 may receive parameters or external enrichment information from external servers. Such information may be utilized by the Near-RT RIC 3025 and may be received at the SMO Framework 3005 or the Non-RT RIC 3015 from non-network data sources or from network functions. In some examples, the Non-RT RIC 3015 or the Near-RT RIC 3025 may be configured to tune RAN behavior or performance. For example, the Non-RT RIC 3015 may monitor long-term trends and patterns for performance and employ AI/ML models to perform corrective actions through the SMO Framework 3005 (such as reconfiguration via O1) or via creation of RAN management policies (such as A1 policies).

As indicated above, Fig. 30 is provided as an example. Other examples may differ from what is described with regard to Fig. 30.

The following provides an overview of some Aspects of the present disclosure:
Aspect 1: A method of wireless communication performed by a user equipment (UE), comprising: setting a hyper frame length based at least in part on a cadence of multimedia data bursts if a discontinuous reception (DRX) cycles are configured for the cadence of the multimedia data bursts; and receiving the multimedia data bursts according to the DRX cycle.
Aspect 2: The method of Aspect 1, further comprising receiving configuration information that indicates the hyper frame length.
Aspect 3: The method of Aspect 1 or 2, further comprising using a modulo operation with the hyper frame length to determine subframe identifiers of DRX on-duration subframes for receiving the multimedia data bursts.
Aspect 4: The method of any of Aspects 1-3, wherein the setting the hyper frame length includes setting the hyper frame length to be less than 1024 frames.
Aspect 5: The method of any of Aspects 1-4, wherein the cadence of the multimedia data bursts corresponds to a number of hertz, and wherein a number of frames forming the hyper frame length is a multiple of a time periodicity of the number of hertz.
Aspect 6: The method of any of Aspects 1-5, wherein the hyper frame length is 1000 subframes or 1000 frames.
Aspect 7: The method of any of Aspects 1-6, further comprising maintaining a system frame number counter for a hyper frame and resetting the counter for a next hyper frame upon reaching the hyper frame length.
Aspect 8: The method of any of Aspects 1-7, further comprising: setting an SFN counter for a hyper frame with a time reference SFN if there is a timing ambiguity of hyper frame configuration caused by packet retransmission.
Aspect 9: The method of Aspect 8, further comprising initializing the system frame number (SFN) counter with one or more of a current SFN or a time reference SFN.
Aspect 10: The method of Aspect 8 or 9, further comprising receiving an indication of the time reference SFN.
Aspect 11: The method of any of Aspects 8-10, wherein the time reference SFN is SFN 0 or SFN 512.
Aspect 12: The method of any of Aspects 8-11, further comprising, in association with an SFN wraparound issue: associating sequence numbers to DRX on-duration cycles or hyper frames; and sequentially searching DRX on-duration cycles.
Aspect 13: A method of wireless communication performed by a user equipment (UE), comprising: sleeping as part of a discontinuous reception (DRX) cycle; waking up, starting at a subframe, based at least in part on a subframe identifier of the subframe and a DRX cycle periodicity that corresponds to a multiple of a periodicity of multimedia data bursts; and receiving a multimedia data burst during the subframe.
Aspect 14: The method of Aspect 13, wherein the subframe identifier is equal to (a number of subframes per frame * a system frame number (SFN) of a frame comprising the subframe) + a subframe number of the subframe within the frame, and wherein the UE is to wake up during the subframe if the subframe identifier is equal to a result of a modulo operation on a value that is based at least in part on a time reference SFN within a hyper frame, the number of subframes per frame, a starting offset, a sequence number of a DRX on-duration or a hyper frame, and a DRX short cadence value or a DRX short cycle value.
Aspect 15: The method of Aspect 13 or 14, wherein the subframe identifier is equal to (a number of subframes per frame * a system frame number (SFN) of a frame comprising the subframe) + a subframe number of the subframe within the frame, and wherein the UE is to wake up during the subframe if the subframe identifier is equal to (a time reference SFN * the number of subframes per frame + a starting offset + a floor value of (a sequential number * 1000 / a DRX short cadence value) modulo (1024 * the number of subframes per frame)).
Aspect 16: The method of Aspect 13 or 14, wherein the subframe identifier is equal to (a number of subframes per frame * a system frame number (SFN) of a frame comprising the subframe) + a subframe number of the subframe within the frame, and wherein the UE is to wake up during the subframe if the subframe identifier is equal to (a time reference SFN * the number of subframes per frame + a starting offset + (a sequential number * a DRX short cycle value)) modulo (1024 * the number of subframes per frame).
Aspect 17: The method of Aspect 13 or 14, the subframe identifier is equal to (a number of subframes per frame * a system frame number (SFN) of a frame comprising the subframe) + a subframe number of the subframe within the frame, and wherein the UE is to wake up during the subframe if the subframe identifier is equal to (a time reference SFN * the number of subframes per frame + a starting offset + a floor or ceiling of (a sequential number * a DRX short cycle value)) modulo (1024 * the number of subframes per frame).
Aspect 18: The method of any of Aspects 13-17, further comprising transmitting, from a source cell to a target cell in association with a handover, an indication of DRX formula values, and wherein the DRX formula values include a sequence number and an accumulated DRX offset.
Aspect 19: The method of any of Aspects 13-18, wherein the DRX short cycle value is one of a set of rational numbers that are associated with a periodicity of the DRX cycle.
Aspect 20: The method of any of Aspects 13-19, wherein the time reference SFN is associated with a time offset.
Aspect 21: The method of any of Aspects 13-20, wherein the starting offset is one of multiple starting offsets that are configured for the DRX short cycle value.
Aspect 22: The method of any of Aspects 13-21, wherein the value is further based at least in part on one of multiple slot offsets that are configured for the DRX short cycle value.
Aspect 23: A method of wireless communication performed by a network entity, comprising: selecting a hyper frame length based at least in part on a cadence of multimedia data bursts if a discontinuous reception (DRX) cycles are configured for the cadence of the multimedia data bursts; and transmitting an indication of the hyper frame length.
Aspect 24: The method of Aspect 23, wherein the hyper frame length is less than 1024 frames.
Aspect 25: The method of Aspect 23 or 24, wherein the hyper frame length is 1000 subframes or 1000 frames.
Aspect 26: The method of any of Aspects 23-25, wherein the cadence of the multimedia data bursts corresponds to a number of hertz (Hz), and wherein a number of frames forming the hyper frame length is a multiple of a time periodicity of the number of Hz.
Aspect 27: A method of wireless communication performed by a user equipment (UE), comprising: sleeping as part of a discontinuous reception (DRX) cycle; waking up, starting at a slot, based at least in part on a slot identifier of the slot and a DRX cycle periodicity that corresponds to a multiple of a periodicity of multimedia data bursts; and receiving a multimedia data burst during the slot.
Aspect 28: The method of Aspect 27, wherein the slot identifier is equal to (a number of slots per frame * a system frame number (SFN) of a frame comprising the slot) + a slot number of the slot within the frame, and wherein the UE is to wake up during the slot if the slot identifier is equal to a result of a modulo operation on a value that is based at least in part on a time reference SFN within a hyper frame, the number of slots per frame, a starting offset, and a DRX short cadence value or a DRX short cycle value.
Aspect 29: The method of Aspect 27 or 28, wherein the slot identifier is equal to (a number of slots per frame * a system frame number (SFN) of a frame comprising the slot) + a slot number of the slot within the frame, and wherein the UE is to wake up during the slot if the slot identifier is equal to (a time reference SFN * the number of slots per frame + (a starting offset * the number of slots per frame) + a slot offset + a floor value of (a sequential number * the number of slots per subframe * 1000 / a DRX short cadence value) modulo (1024 * the number of slots per frame)).
Aspect 30: The method of Aspect 27 or 28, wherein the slot identifier is equal to (a number of slots per frame * a system frame number (SFN) of a frame comprising the slot) + a slot number of the slot within the frame, and wherein the UE is to wake up during the slot if the slot identifier is equal to (a time reference SFN * the number of slots per frame + (a starting offset * the number of slots per frame) + a slot offset + (a sequential number * a DRX short cycle value)) modulo (1024 * the number of slots per frame).
Aspect 31: The method of Aspect 27 or 28, wherein the slot identifier is equal to (a number of slots per frame * a system frame number (SFN) of a frame comprising the slot) + a slot number of the slot within the frame, and wherein the UE is to wake up during the slot if the slot identifier is equal to (a time reference SFN * the number of slots per frame + a starting offset + (a sequential number * a DRX short cycle value)) modulo (1024 * the number of slots per frame).
Aspect 32: The method of any of Aspects 27-31, wherein the DRX short cycle value is one of a set of rational numbers that are associated with a periodicity of the DRX cycle.
Aspect 33: The method of any of Aspects 27-32, wherein the time reference SFN is associated with a time offset.
Aspect 34: The method of any of Aspects 27-33, wherein the starting offset is one of multiple starting offsets that are configured for the DRX short cycle value.
Aspect 35: The method of any of Aspects 27-34, wherein the value is further based at least in part on one of multiple slot offsets that are configured for the DRX short cycle value.
Aspect 36: A method of wireless communication performed by a user equipment (UE), comprising: waking up during an on-duration occasion of a discontinuous reception (DRX) cycle to receive a multimedia data burst; and shifting a timing of a next on-duration occasion of the DRX cycle based at least in part on the DRX cycle and a cadence of multimedia data bursts.
Aspect 37: The method of Aspect 36, wherein the shifting the timing includes shifting the timing of the next on-duration occasion of the DRX cycle based at least in part on receiving, in a medium access control control element (MAC CE), an indication to shift the timing, wherein the indication includes a bit in the MAC CE that indicates that a DRX shift is to compensate for a subframe index misalignment shift, and wherein the MAC CE includes a shift value index.
Aspect 38: The method of Aspect 37, wherein the indication includes a bit in the MAC CE that indicates that a DRX shift is to compensate for a subframe index misalignment shift, and wherein the MAC CE includes a shift value index.
Aspect 39: The method of Aspect 37, wherein the indication is associated with a new value set in a shift table list for a subframe index misalignment shift.
Aspect 40: The method of any of Aspects 36-39, wherein the shifting the timing includes shifting the timing of the next on-duration occasion of the DRX cycle based at least in part on a hyper frame change.
Aspect 41: The method of any of Aspects 36-40, further comprising compensating for a 240 millisecond drift every hyper frame using a DRX formula that is specified as [(a system frame number (SFN) of a frame × 10) + a subframe number + M × 240] modulo (DRX short cycle) = DRX start offset modulo DRX short cycle, and wherein M increases by 1 every hyper frame with a time reference SFN; adding 10240 milliseconds every hyper frame in a DRX formula that is specified as [(a system frame number (SFN) of a frame × 10) + a subframe number + M × 10240] modulo (DRX short cycle) = DRX start offset modulo DRX short cycle, and wherein M increases by 1 every hyper frame with a time reference SFN; or adding a specified amount of time every hyper frame in a DRX formula that includes a subframe number and a DRX short cycle.
Aspect 42: The method of any of Aspects 36-40, further comprising adding 10240 milliseconds every hyper frame in a DRX formula that is specified as [(a system frame number (SFN) of a frame × 10) + a subframe number + M × 10240] modulo (DRX short cycle) = DRX start offset modulo DRX short cycle, and wherein M increases by 1 every hyper frame with a time reference SFN.
Aspect 43: The method of any of Aspects 36-40, further comprising adding specified amount of time every hyper frame in a DRX formula that is specified as [(a system frame number (SFN) of a frame × 10) + a subframe number + M × the specified amount of time] modulo (DRX short cycle) = DRX start offset modulo DRX short cycle, and wherein M increases by 1 every hyper frame with a time reference SFN.
Aspect 44: The method of any of any of Aspects 36-40, further comprising adding a specified amount of time every hyper frame in a DRX formula that includes a subframe number and a DRX short cycle.
Aspect 45: A method of wireless communication performed by a network entity, comprising: determining that a subframe index misalignment shift is to occur in a discontinuous reception (DRX) cycle for a user equipment (UE); and transmitting, to the UE in a medium access control control element (MAC CE), an indication to shift a timing of a next on-duration occasion of the DRX cycle.
Aspect 46: The method of Aspect 45, wherein the indication includes a bit in the MAC CE that indicates that a DRX shift is to compensate for a subframe index misalignment shift, and wherein the MAC CE includes a shift value index.
Aspect 47: The method of Aspect 45 or 46, wherein the indication is associated with a new value set in a shift table list for a subframe index misalignment shift.
Aspect 48: The method of any of Aspects 1-47, further comprising transmitting, from a source cell to a target cell in association with a handover, an indication of DRX formula values, and wherein the DRX formula values include a sequence number and an accumulated DRX offset.
Aspect 49: A method of wireless communication performed by a user equipment (UE), comprising: waking up during an on-duration occasion of a discontinuous reception (DRX) cycle to receive a multimedia data burst; and compensating for a timing drift between DRX on-durations and multimedia burst traffic that is associated with a misalignment between a hyper frame length and a periodicity of the multimedia data bursts.
Aspect 50: An apparatus for wireless communication at a device, comprising a processor; memory coupled with the processor; and instructions stored in the memory and executable by the processor to cause the apparatus to perform the method of one or more of Aspects 1-49.
Aspect 51: A device for wireless communication, comprising a memory and one or more processors coupled to the memory, the one or more processors configured to perform the method of one or more of Aspects 1-49.
Aspect 52: An apparatus for wireless communication, comprising at least one means for performing the method of one or more of Aspects 1-49.
Aspect 53: A non-transitory computer-readable medium storing code for wireless communication, the code comprising instructions executable by a processor to perform the method of one or more of Aspects 1-49.
Aspect 54: A non-transitory computer-readable medium storing a set of instructions for wireless communication, the set of instructions comprising one or more instructions that, when executed by one or more processors of a device, cause the device to perform the method of one or more of Aspects 1-49.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").
**In the following, further embodiments are described to facilitate the understanding of the invention:**
1. A user equipment (UE) for wireless communication, comprising:
   memory; and
   one or more processors coupled to the memory, the memory comprising instructions executable by the one or more processors to cause the UE to:
      set a hyper frame length based at least in part on a cadence of multimedia data bursts if discontinuous reception (DRX) cycles are configured for the cadence of the multimedia data bursts; and
      receive the multimedia data bursts according to the DRX cycles.
2. The UE of embodiment 1, wherein the memory further comprises instructions executable by the one or more processors to cause the UE to receive configuration information that indicates the hyper frame length.
3. The UE of embodiment 1, wherein the memory further comprises instructions executable by the one or more processors to cause the UE to use a modulo operation with the hyper frame length to determine subframe identifiers of DRX on-duration subframes for receiving the multimedia data bursts.
4. The UE of embodiment 1, wherein the memory further comprises instructions executable by the one or more processors to cause the UE to set the hyper frame length to be less than 1024 frames.
5. The UE of embodiment 1, wherein the cadence of the multimedia data bursts corresponds to a number of hertz, and wherein a number of frames forming the hyper frame length is a multiple of a time periodicity of the number of hertz.
6. The UE of embodiment 1, wherein the hyper frame length is 1000 subframes or 1000 frames.
7. The UE of embodiment 1, wherein the memory further comprises instructions executable by the one or more processors to cause the UE to maintain a system frame number counter (SFN) for a hyper frame and reset the SFN counter for a next hyper frame upon reaching the hyper frame length.
8. The UE of embodiment 1, wherein the memory further comprises instructions executable by the one or more processors to cause the UE to set a system frame number (SFN) counter for a hyper frame with a time reference SFN if there is a timing ambiguity for a hyper frame configuration caused by a packet transmission.
9. The UE of embodiment 8, wherein the memory further comprises instructions executable by the one or more processors to cause the UE to initialize the system frame number (SFN) counter with one or more of a current SFN or a time reference SFN.
10. The UE of embodiment 8, wherein the memory further comprises instructions executable by the one or more processors to cause the UE to receive an indication of the time reference SFN.
11. The UE of embodiment 8, wherein the time reference SFN is SFN 0 or SFN 512.
12. The UE of embodiment 1, further comprising, in association with an SFN wraparound issue:
   associating sequence numbers to DRX on-duration cycles or hyper frames; and
   sequentially searching DRX on-duration cycles.
13. A user equipment (UE) for wireless communication, comprising:
   memory; and
   one or more processors coupled to the memory, the memory comprising instructions executable by the one or more processors to cause the UE to:
      sleep as part of a discontinuous reception (DRX) cycle;
      wake up, starting at a subframe, based at least in part on a subframe identifier of the subframe and a DRX cycle periodicity that corresponds to a multiple of a periodicity of multimedia data bursts; and
      receive a multimedia data burst during the subframe.
14. The UE of embodiment 13, wherein the subframe identifier is equal to (a number of subframes per frame * a system frame number (SFN) of a frame comprising the subframe) + a subframe number of the subframe within the frame, and wherein the memory further comprises instructions executable by the one or more processors to cause the UE to wake up during the subframe if the subframe identifier is equal to a result of a modulo operation on a value that is based at least in part on a time reference SFN within a hyper frame, the number of subframes per frame, a starting offset, a sequence number of a DRX on-duration or a hyper frame, and a DRX short cadence value or a DRX short cycle value.
15. The UE of embodiment 14, wherein the starting offset is one of multiple starting offsets that are configured for the DRX short cycle value.
16. The UE of embodiment 14, wherein the value is further based at least in part on one of multiple slot offsets that are configured for the DRX short cycle value.
17. The UE of embodiment 13, wherein the subframe identifier is equal to (a number of subframes per frame * a system frame number (SFN) of a frame comprising the subframe) + a subframe number of the subframe within the frame, and wherein the memory further comprises instructions executable by the one or more processors to cause the UE to wake up during the subframe if the subframe identifier is equal to (a time reference SFN * the number of subframes per frame + a starting offset + a floor value of (a sequential number * 1000 / a DRX short cadence value)) modulo (1024 * the number of subframes per frame).
18. The UE of embodiment 13, wherein the subframe identifier is equal to (a number of subframes per frame * a system frame number (SFN) of a frame comprising the subframe) + a subframe number of the subframe within the frame, and wherein the memory further comprises instructions executable by the one or more processors to cause the UE to wake up during the subframe if the subframe identifier is equal to (a time reference SFN * the number of subframes per frame + a starting offset + (a sequential number * a DRX short cycle value)) modulo (1024 * the number of subframes per frame).
19. The UE of embodiment 13, wherein the subframe identifier is equal to (a number of subframes per frame * a system frame number (SFN) of a frame comprising the subframe) + a subframe number of the subframe within the frame, and wherein the memory further comprises instructions executable by the one or more processors to cause the UE to wake up during the subframe if the subframe identifier is equal to (a time reference SFN * the number of subframes per frame + a starting offset + a floor or ceiling of (a sequential number * a DRX short cycle value)) modulo (1024 * the number of subframes per frame).
20. The UE of embodiment 13, wherein the memory further comprises instructions executable by the one or more processors to cause the UE to transmit, from a source cell to a target cell in association with a handover, an indication of DRX formula values, and wherein the DRX formula values include a sequence number and an accumulated DRX offset.
21. A user equipment (UE) for wireless communication, comprising:
   memory; and
   one or more processors coupled to the memory, the memory comprising instructions executable by the one or more processors to cause the UE to:
      sleep as part of a discontinuous reception (DRX) cycle;
      wake up, starting at a slot, based at least in part on a slot identifier of the slot and a DRX cycle periodicity that corresponds to a multiple of a periodicity of multimedia data bursts; and
      receive a multimedia data burst during the slot.
22. The UE of embodiment 21, wherein the slot identifier is equal to (a number of slots per frame * a system frame number (SFN) of a frame comprising the slot) + a slot number of the slot within the frame, and wherein the memory further comprises instructions executable by the one or more processors to cause the UE to wake up during the slot if the slot identifier is equal to a result of a modulo operation on a value that is based at least in part on a time reference SFN within a hyper frame, the number of slots per frame, a starting offset, and a DRX short cadence value or a DRX short cycle value.
23. The UE of embodiment 21, wherein the slot identifier is equal to (a number of slots per frame * a system frame number (SFN) of a frame comprising the slot) + a slot number of the slot within the frame, and wherein the memory further comprises instructions executable by the one or more processors to cause the UE to wake up during the slot if the slot identifier is equal to (a time reference SFN * the number of slots per frame + (a starting offset * the number of slots per frame) + a slot offset + a floor value of (a sequential number * the number of slots per subframe * 1000 / a DRX short cadence value)) modulo (1024 * the number of slots per frame).
24. The UE of embodiment 21, wherein the slot identifier is equal to (a number of slots per frame * a system frame number (SFN) of a frame comprising the slot) + a slot number of the slot within the frame, and wherein the memory further comprises instructions executable by the one or more processors to cause the UE to wake up during the slot if the slot identifier is equal to (a time reference SFN * the number of slots per frame + (a starting offset * the number of slots per frame) + a slot offset + (a sequential number * a DRX short cycle value)) modulo (1024 * the number of slots per frame).
25. The UE of embodiment 21, wherein the slot identifier is equal to (a number of slots per frame * a system frame number (SFN) of a frame comprising the slot) + a slot number of the slot within the frame, and wherein the memory further comprises instructions executable by the one or more processors to cause the UE to wake up during the slot if the slot identifier is equal to (a time reference SFN * the number of slots per frame + a starting offset + (a sequential number * a DRX short cycle value)) modulo (1024 * the number of slots per frame).
26. A user equipment (UE) for wireless communication, comprising:
   memory; and
   one or more processors coupled to the memory, the memory comprising instructions executable by the one or more processors to cause the UE to:
      wake up during an on-duration occasion of a discontinuous reception (DRX) cycle to receive a multimedia data burst; and
      shift a timing of a next on-duration occasion of the DRX cycle based at least in part on the DRX cycle and a cadence of multimedia data bursts.
27. The UE of embodiment 26, wherein the memory further comprises instructions executable by the one or more processors to cause the UE to shift the timing of the next on-duration occasion of the DRX cycle based at least in part on receiving, in a medium access control control element (MAC CE), an indication to shift the timing, wherein the indication includes a bit in the MAC CE that indicates that a DRX shift is to compensate for a subframe index misalignment shift, and wherein the MAC CE includes a shift value index.
28. The UE of embodiment 26, wherein the indication is associated with a new value set in a shift table list for a subframe index misalignment shift.
29. The UE of embodiment 26, wherein the memory further comprises instructions executable by the one or more processors to cause the UE to shift the timing of the next on-duration occasion of the DRX cycle based at least in part on a hyper frame change.
30. The UE of embodiment 26, wherein the memory further comprises instructions executable by the one or more processors to cause the UE to one or more of:
   compensate for a 240 millisecond drift every hyper frame using a DRX formula that is specified as [(a system frame number (SFN) of a frame × 10) + a subframe number + M × 240] modulo (DRX short cycle) = DRX start offset modulo DRX short cycle, and wherein M increases by 1 every hyper frame with a time reference SFN;
   add 10240 milliseconds every hyper frame in a DRX formula that is specified as [(a system frame number (SFN) of a frame × 10) + a subframe number + M × 10240] modulo (DRX short cycle) = DRX start offset modulo DRX short cycle, and wherein M increases by 1 every hyper frame with a time reference SFN; or
   add a specified amount of time every hyper frame in a DRX formula that includes a subframe number and a DRX short cycle.

## Claims

1. A user equipment, UE, for wireless communication, comprising:
memory; and
one or more processors coupled to the memory, the memory comprising instructions executable by the one or more processors to cause the UE to:
sleep as part of a discontinuous reception, DRX, cycle;
wake up, starting at a slot, based at least in part on a slot identifier of the slot and a DRX cycle periodicity that corresponds to a multiple of a periodicity of multimedia data bursts; and
receive a multimedia data burst during the slot.

2. The UE of claim 1, wherein the slot identifier is equal to (a number of slots per frame * a system frame number, SFN, of a frame comprising the slot) + a slot number of the slot within the frame, and wherein the memory further comprises instructions executable by the one or more processors to cause the UE to wake up during the slot if the slot identifier is equal to a result of a modulo operation on a value that is based at least in part on a time reference SFN within a hyper frame, the number of slots per frame, a starting offset, and a DRX short cadence value or a DRX short cycle value.

3. The UE of claim 1, wherein the slot identifier is equal to (a number of slots per frame * a system frame number, SFN, of a frame comprising the slot) + a slot number of the slot within the frame, and wherein the memory further comprises instructions executable by the one or more processors to cause the UE to wake up during the slot if the slot identifier is equal to (a time reference SFN * the number of slots per frame + (a starting offset * the number of slots per frame) + a slot offset + a floor value of (a sequential number * the number of slots per subframe * 1000 / a DRX short cadence value)) modulo (1024 * the number of slots per frame).

4. The UE of claim 1, wherein the slot identifier is equal to (a number of slots per frame * a system frame number, SFN, of a frame comprising the slot) + a slot number of the slot within the frame, and wherein the memory further comprises instructions executable by the one or more processors to cause the UE to wake up during the slot if the slot identifier is equal to (a time reference SFN * the number of slots per frame + (a starting offset * the number of slots per frame) + a slot offset + (a sequential number * a DRX short cycle value)) modulo (1024 * the number of slots per frame).

5. The UE of claim 1, wherein the slot identifier is equal to (a number of slots per frame * a system frame number, SFN, of a frame comprising the slot) + a slot number of the slot within the frame, and wherein the memory further comprises instructions executable by the one or more processors to cause the UE to wake up during the slot if the slot identifier is equal to (a time reference SFN * the number of slots per frame + a starting offset + (a sequential number * a DRX short cycle value)) modulo (1024 * the number of slots per frame).

6. A method for wireless communication by a user equipment, UE, comprising:
sleeping as part of a discontinuous reception, DRX, cycle;
waking up, starting at a slot, based at least in part on a slot identifier of the slot and a DRX cycle periodicity that corresponds to a multiple of a periodicity of multimedia data bursts; and
receiving a multimedia data burst during the slot.

7. The method of claim 6, wherein the slot identifier is equal to (a number of slots per frame * a system frame number, SFN, of a frame comprising the slot) + a slot number of the slot within the frame, and wherein the UE is to wake up during the slot if the slot identifier is equal to a result of a modulo operation on a value that is based at least in part on a time reference SFN within a hyper frame, the number of slots per frame, a starting offset, and a DRX short cadence value or a DRX short cycle value.

8. The method of claim 6 or claim 7, wherein the slot identifier is equal to (a number of slots per frame * a system frame number, SFN, of a frame comprising the slot) + a slot number of the slot within the frame, and wherein the UE is to wake up during the slot if the slot identifier is equal to (a time reference SFN * the number of slots per frame + (a starting offset * the number of slots per frame) + a slot offset + a floor value of (a sequential number * the number of slots per subframe * 1000 / a DRX short cadence value)) modulo (1024 * the number of slots per frame).

9. The method of claim 6 or claim 7, wherein the slot identifier is equal to (a number of slots per frame * a system frame number, SFN, of a frame comprising the slot) + a slot number of the slot within the frame, and wherein the UE is to wake up during the slot if the slot identifier is equal to (a time reference SFN * the number of slots per frame + (a starting offset * the number of slots per frame) + a slot offset + (a sequential number * a DRX short cycle value)) modulo (1024 * the number of slots per frame).

10. The method of claim 6 or claim 7, wherein the slot identifier is equal to (a number of slots per frame * a system frame number, SFN, of a frame comprising the slot) + a slot number of the slot within the frame, and wherein the UE is to wake up during the slot if the slot identifier is equal to (a time reference SFN * the number of slots per frame + a starting offset + (a sequential number * a DRX short cycle value)) modulo (1024 * the number of slots per frame).

11. The method of any of claims 6 to 10, wherein the DRX short cycle value is one of a set of rational numbers that are associated with a periodicity of the DRX cycle.

12. The method of any of claims 6 to 11, wherein the time reference SFN is associated with a time offset.

13. The method of any of claims 6 to 12, wherein the starting offset is one of multiple starting offsets that are configured for the DRX short cycle value.

14. The method of any of claims 6 to 13, wherein the value is further based at least in part on one of multiple slot offsets that are configured for the DRX short cycle value.

15. A computer program comprising instructions which,
when the instructions are executed by one or more processors of a user equipment, UE, for wireless communication, cause said one or more processors to carry out the method of any of claims 6 to 14.
